# EUROPEAN PATENT APPLICATION

(11) **EP 1 777 517 A1**
(43) Date of publication of application: **25.04.2007**
(21) Application number: 05770526.1
(22) Date of filing: 10.08.2005
(51) Int. Cl.: G01N 31/00, G01N 21/78, G01N 31/22

(54) **OZONE GAS DETECTING ELEMENT**

(30) Priority: 11.08.2004 JP 2004234430; 04.11.2004 JP 2004320387; 26.01.2005 JP 2005017977; 26.07.2005 JP 2005215564; 26.07.2005 JP 2005215568
(71) Applicant: NIPPON TELEGRAPH AND TELEPHONE CORPORATION, Tokyo 100-8116 (JP)
(72) Inventor: MARUO, Yasuko, NTT Intellectual Property Center, Musashino-shi, Tokyo 1808585 (JP); OGAWA, Shigeo, NTT Intellectual Property Center, Musashino-shi, Tokyo 1808585 (JP); SAKATA, Seizou, NTT Intellectual Property Cente, Musashino-shi, Tokyo 1808585 (JP); TANAKA, Tohru, NTT Intellectual Property Center, Musashino-shi, Tokyo 1808585 (JP); NAKAMURA, Jirou, NTT Intellectual Property Center, Musashino-shi, Tokyo 1808585 (JP); KUNIOKA, Tatsuya, NTT Intellectual Property Center, Musashino-shi, Tokyo 1808585 (JP)
(74) Representative: Wenzel & Kalkoff
(86) International application number: PCT/JP2005/014689
(87) International publication number: WO 2006/016623

(57) **Abstract**

A sensing element (102) includes a porous material (121) which is porous glass having a plurality of fine pores (122) having an average pore size of 4 µm, a sensing agent (123) formed in the pores (122), and a selective permeable film (124) which is formed to cover the surface of the porous material (121) and made of a plastic film. The selective permeable film (124) is made of an organic polymer such as polyacrylonitrile or PMMA which uses, as a monomer, a compound made of a chainlike molecule containing a vinyl group, and has a film thickness of about 0.05 to 1 µm.

## Description

### Technical Field

The present invention relates to an ozone gas sensing element used to sense ozone gas.

### Background Art

Presently, air pollution by NOₓ, SPM (Suspended Particulate Matter), and photochemical oxidant occurs not only in large cities but also in their peripheral regions, and the influence on the environment is regarded as serious. Photochemical oxidant mainly contains a substance having strong oxidizing properties such as ozone, is formed by a photochemical reaction of a pollutant such as NOₓ or hydrocarbon emitted from factories, business offices, and motor vehicles upon irradiation with sunlight, and causes photochemical smog.

In Japan, environmental standards are set for these substances, and the substances are measured by general environmental air measurement stations in many places. For example, although the average value measured per hour of photochemical oxidant is 60 ppb or less as an environmental standard, measurement results meeting this environmental standard are obtained by three out of 1,168 measurement stations in the whole country in 2002.

Photochemical oxidant is mostly made of ozone, and this ozone is measured by an automatic measurement method such as an ultraviolet absorption method in these measurement stations. Ozone gas concentration measurement by this automatic measurement method can measure a very small amount of gas at a few ppb, but the method requires high costs, and maintenance is always necessary to maintain the accuracy. Also, the automatic measurement using instruments always requires electric power, requires maintenance and management, and hence requires enormous costs to maintain the instruments. In addition, it is necessary to secure a power supply, temperature-controlled installation environment, and standard gas.

Furthermore, to accurately investigate a gas concentration distribution in an environment and evaluate the influence on a local environment, measurement and investigation must be performed on a nationwide scale by increasing the number of observation points, but it is very difficult to apply the above-mentioned automatic measurement method to a large number of observation points. Accordingly, demands have arisen for readily usable, compact, inexpensive ozone gas analyzers and simple measurement methods.

Recently, ozone is extensively used in various industrial fields such as processing of water, sterilization of foods, and bleaching of paper, by noting the strong sterilizing power (oxidizing power) of ozone and the advantage of ozone that it decomposes into oxygen and produces no toxic substance. Therefore, as a labor environmental standard, a reference value of 100 ppb for 8 hrs is set for ozone concentration. In factories using ozone, it is necessary not only to install ozone alarms but also to manage workers so that each worker works within the range of labor standards, and a portable meter for a worker is necessary for this purpose.

In a situation like this, the development of ozone gas measurement techniques such as a semiconductor gas sensor, a solid electrolyte gas sensor, an electrochemical gas sensor, and a quartz crystal oscillation gas sensor is presently widely advancing. However, these sensors are developed to evaluate responses within short time periods, and only a few are developed for monitoring,which requires accumulation of measurement data. When accumulation of measurement data is necessary, therefore, a gas sensor must always be operated. Also, a sensing unit of, e.g., a semiconductor sensor must be held at a few 100°C, so a large amount of electric power is necessary to always operate the sensor.

In addition, the detection sensitivity of any of the aforementioned sensors is about sub-ppm, so the sensor cannot sense a concentration in an actual environment, e.g., cannot measure ozone at 10 ppb. Although some semiconductor sensors react with ozone at 10 ppb, the detection output is nonlinear with respect to the concentration, and the output value largely changes from one sensor to another, thereby making comparison difficult when different sensors are used. Also, the influence of another gas cannot be ignored in many cases. There is a method using an indicator tube type gas meter, but this method is also developed for measurements within short time periods in measurement locations, so it is difficult to use the method for accumulation of measurement data. In addition, this method has the problems that a measurer must go to the site, and an individual difference is produced in reading of a color change between measurements, thereby decreasing the measurement accuracy.

Also, as a simple high-sensitivity ozone analyzing technique, ozone sensing paper carrying starch and potassium iodide is proposed (reference 1: Japanese Patent No. 3257622). Unfortunately, this sensing paper requires a special sheet-like carrier, and also requires electric power to drive a pump for forcedly drawing a gas to be sensed, a light source for measurement, and a detector made of the pump and light source. It is also necessary to replace the sheet with a new one whenever measurement is performed, so no cumulative use is possible. Additionally, the measurement using the sensing paper detects all photochemical oxidants, rather than ozone.

As another simple high-sensitivity ozone analyzing technique, a technique using ozone sensing paper carrying indigo carmine is proposed (reference 2: Anna C. Franklin, et al., "Ozone Measurements in South Carolina Using Passive Samplers", Journal of the Air & Waste Measurement Association, Vol. 54, pp. 1312-1320, 2004). A technique which adjusts the sensitivity by adjusting the thickness of a membrane filter formed on the surface of ozone sensing paper carrying indigo carmine is also proposed (reference 3: "Operating Instructions for Ozone Monitor", Part#380010-10, http://www.afcintal.com/pdf/KM/380010.pdf.)

As an ozone analyzing technique which is simple and has high sensitivity compared to the ozone gas analyzing techniques described above, ozone gas measurement in which porous glass containing, in its pores, a dye which changes its light absorption in the visible region when reacting with ozone is used as a sensing element is proposed (reference 4: Japanese Patent Laid-Open No. 2004-144729). This technique does not require any large apparatus, and can measure ozone gas on the order of ppb at high accuracy. Also, this technique requires only a short measurement time, i.e., can measure the accumulation amount of ozone concentrations for every 10 min.

### Disclosure of Invention

### Problems to be Solved by the Invention

In the technique of reference 4, however, an apparatus which is compact but requires electric power is necessary to detect ozone gas on the order of ppb at high accuracy in accordance with the environmental standard. Also, in the technique of reference 4, if the accumulation amount is about 500 ppb × hour, the state in which ozone is detected cannot be easily confirmed with the eye. Furthermore, the measurement method disclosed in reference 4 has the problem that the ozone concentration cannot be accurately measured because the measurement is disturbed by nitrogen dioxide which coexists with ozone in the environment. This disturbance of the measurement by nitrogen dioxide gas is a problem in other ozone measurements as well.

The present invention has been made to solve the above problems, and has as its object to make it possible to easily and accurately measure ozone gas, while the disturbance by nitrogen dioxide is suppressed and a cumulative use is possible. It is another object of the present invention to make it possible to detect, in an easily checkable state, the integration amount of ozone in a gas to be sensed by a cumulative effect, without using any electric power, in a readily portable state.

### Means for Solving the Problems

An ozone gas sensing element according to the present invention comprises a porous material and a sensing agent formed in the pores of the porous material, and a light-transmitting gas selective permeable film which covers the surface of the porous material, wherein the sensing agent contains a dye which changes absorption in a visible region by reacting with ozone, and the gas selective permeable film comprises an organic polymer which uses, as a monomer, a compound made of a chainlike molecule containing a vinyl group.

In the above ozone gas sensing element, the porous material is transparent, and made of, e.g., glass. The average pore size of the porous material allows penetration of the sensing element, and need only be less than 20 nm. The porous material may also be a sheet-like material made of fibers. This sheet-like material made of fibers is an ozone sensing sheet to be described below.

In the ozone gas sensing element, the monomer can be at least one of acrylic acid, acrylonitrile, methacrylic acid, methyl methacrylate, vinyl chloride, and vinylidene chloride. The organic polymer may also be a copolymer. The organic polymer may also be polymethylmethacrylate. In this case, the molecular weight of the organic polymer is preferably 100,000 or more. Note that the dye need only have an indigo ring.

An ozone gas sensing element according to the present invention comprises an ozone sensing sheet formed by carrying a dye having an indigo ring, a humectant, and an acid by a sheet-like carrier made of cellulose. Note that the humectant is glycerin, and the dye is indigo carmine.

An ozone gas sensing element according to the present invention comprises an ozone sensing sheet formed by carrying a dye having an indigo ring and a humectant by a sheet-like carrier made of fibers. For example, the carrier is a sheet-like carrier made of cellulose. The ozone sensing sheet is formed by dipping the carrier into water or an acidic aqueous solution in which the dye and humectant are dissolved, thereby impregnating the carrier with the aqueous solution, and drying the carrier. In this ozone sensing sheet, ozone dissolves in the humectant.

In the above ozone gas sensing element, the ozone sensing sheet need only be formed by dipping the carrier into an acidic aqueous solution in which the dye and the humectant whose wt% is 10% to 50% are dissolved, thereby impregnating the carrier with the aqueous solution, and drying the carrier. The humectant need only be at least one of glycerin, ethylene glycol, propylene glycol, and trimethylene glycol. Most preferably, the humectant is glycerin, and the wt% of the humectant is 30% in the aqueous solution. The dye need only be indigo carmine. The solution need only be made acidic by at least one acid selected from the group consisting of acetic acid, citric acid, and tartaric acid, or need only be made acidic by a pH buffering agent made of an acid and its salt.

In the above ozone gas sensing element, the ozone sensing sheet may also comprise a plurality of ozone sensing sheets, and the ozone sensing sheets may also be formed by dipping the carriers into aqueous solutions in which the humectants different in wt% are dissolved, thereby impregnating the carriers with the aqueous solutions, and drying the carriers. The ozone gas sensing element may further comprise a gas amount limiting layer formed on the surface of the ozone sensing sheet, and including a plurality of through holes. The ozone gas sensing element may further comprise a gas amount limiting cover formed to cover the ozone sensing sheet, and having an opening in its portion. In this case, the ozone gas sensing element may also further comprise a gas permeable film covering the opening. The ozone sensing sheet may also be covered with the gas selective permeable film described above.

### Effects of the Invention

As described above, the present invention comprises a light-transmitting gas selective permeable film made of an organic polymer which uses, as a monomer, a compound made of a chainlike molecule containing a vinyl group, so the penetration of nitrogen dioxide into the porous material can be suppressed, and this achieves a remarkable effect of simply and accurately measuring ozone gas while the disturbance by nitrogen dioxide gas is suppressed and a cumulative use is possible.

Also, in the present invention, a dye having an indigo ring and a humectant are carried by a sheet-like carrier, and this achieves a notable effect of providing an ozone sensing sheet capable of detecting, in an easily checkable state, the integration amount of ozone in a gas to be sensed by a cumulative effect, without using any electric power, in a readily portable state. Furthermore, a favorable amount of humectant can be carried by dipping a carrier into an acidic aqueous solution in which a dye and the humectant whose wt% is 10% to 50% are dissolved, thereby impregnating the carrier with the aqueous solution, and drying the carrier.

### Brief Description of Drawings

Fig. 1A is a view showing an example of the arrangement of an ozone gas analyzer using an ozone gas sensing element according to an embodiment of the present invention;
Fig. 1B is a partial sectional view showing an example of the arrangement of the ozone gas analyzer using the ozone gas sensing element according to the embodiment of the present invention;
Fig. 2 is a graph showing the absorbance measurement results of the ozone gas sensing element;
Fig. 3 is a graph showing the absorbance measurement results of the ozone gas sensing element;
Fig. 4 is a graph showing the absorbance measurement results of the ozone gas sensing element;
Fig. 5 is a graph showing the absorbance measurement results of the ozone gas sensing element;
Fig. 6 is a graph showing the absorbance measurement results of the ozone gas sensing element;
Fig. 7 is a graph showing the absorbance measurement results of the ozone gas sensing element;
Fig. 8 is a graph showing the absorbance measurement results of the ozone gas sensing element;
Fig. 9 is a graph showing the absorbance measurement results of the ozone gas sensing element;
Fig. 10 is a graph showing the absorbance measurement results of the ozone gas sensing element;
Fig. 11 is a graph showing the absorbance measurement results of the ozone gas sensing element;
Fig. 12 is a graph showing the absorbance measurement results of the ozone gas sensing element;
Fig. 13 is a graph showing the absorbance measurement results of the ozone gas sensing element;
Fig. 14 is a graph showing the absorbance measurement results of the ozone gas sensing element;
Fig. 15 is a graph showing the absorbance measurement results of the ozone gas sensing element;
Fig. 16 is a graph showing the absorbance measurement results of the ozone gas sensing element;
Fig. 17 is a graph showing the absorbance measurement results of the ozone gas sensing element;
Fig. 18 is a view showing an example of the arrangement of an ozone gas analyzer using another ozone gas sensing element according to an embodiment of the present invention;
Fig. 19 is a graph showing the absorbance measurement results of the ozone gas sensing element;
Fig. 20 is a graph showing the absorbance measurement results of the ozone gas sensing element;
Figs. 21A to 21H are views for explaining the manufacture of an ozone sensing sheet according to an embodiment of the present invention;
Figs. 22A to 22D are views for explaining the manufacture of another ozone sensing sheet according to an embodiment of the present invention;
Figs. 23A to 23D are views for explaining an example of a method of manufacturing an ozone sensing sheet as an ozone gas sensing element according to an embodiment of the present invention;
Fig. 24 is a graph showing the result of measurement of the color of the ozone sensing sheet performed by a spectrophotometer;
Fig. 25 is a graph showing the result of the measurement of the spectral reflectance (the reflection absorbance) of the ozone sensing sheet at a wavelength of 610 nm performed by a spectrophotometer;
Fig. 26 is a graph showing the result of the measurement of the spectral reflectance (the reflection absorbance) of the ozone sensing sheet at a wavelength of 610 nm performed by a spectrophotometer;
Fig. 27 is a graph showing the result of the measurement of the spectral reflectance (the reflection absorbance) of the ozone sensing sheet at a wavelength of 610 nm performed by a spectrophotometer;
Fig. 28 is a graph showing the result of the measurement of the spectral reflectance (the reflection absorbance) of the ozone sensing sheet at a wavelength of 610 nm performed by a spectrophotometer;
Fig. 29 is a graph showing the result of the measurement of the spectral reflectance (the reflection absorbance) of the ozone sensing sheet at a wavelength of 610 nm performed by a spectrophotometer;
Fig. 30 is a graph showing the result of the measurement of the spectral reflectance (the reflection absorbance) of the ozone sensing sheet at a wavelength of 610 nm performed by a spectrophotometer;
Fig. 31 is a graph showing the result of the measurement of the spectral reflectance (the reflection absorbance) of the ozone sensing sheet at a wavelength of 610 nm performed by a spectrophotometer;
Fig. 32 is a view showing an example of the arrangement of another ozone gas sensing element according to an embodiment of the present invention;
Fig. 33 is a perspective view showing an example of the arrangement of another ozone gas sensing element according to an embodiment of the present invention;
Fig. 34 is a sectional view showing the example of the arrangement of the other ozone gas sensing element according to the embodiment of the present invention;
Fig. 35 is a perspective view showing an example of the arrangement of another ozone gas sensing element according to an embodiment of the present invention; and
Fig. 36 is a sectional view showing the example of the arrangement of the other ozone gas sensing element according to the embodiment of the present invention.

### Best Mode for Carrying Out the Invention

Embodiments of the present invention will be described below with reference to the accompanying drawings.

### [1]

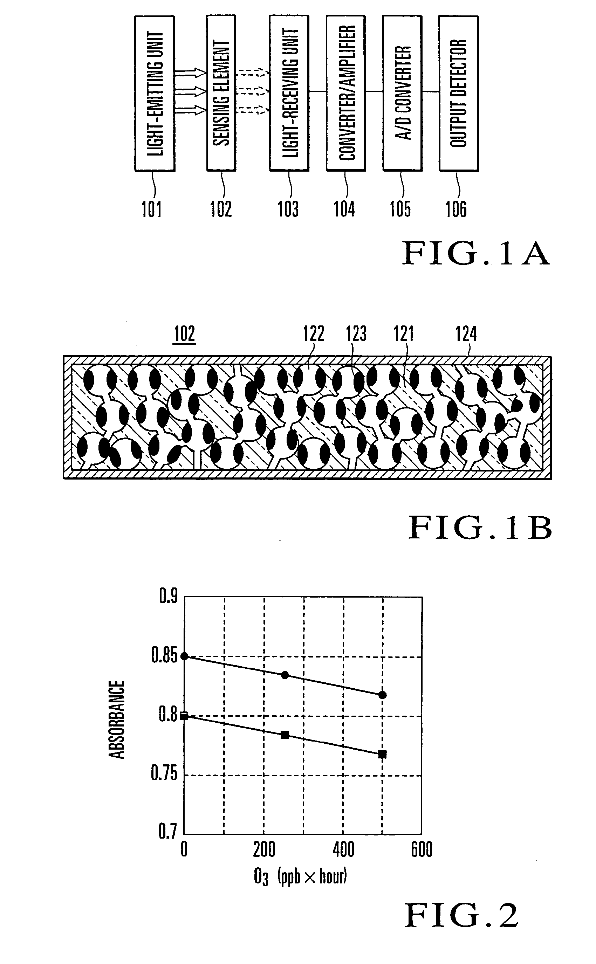

First, an example of the arrangement of an ozone gas sensing element according to an embodiment of the present invention will be explained below. Fig. 1A is a view showing an example of the arrangement of an ozone gas analyzer using a sensing element 102 according to the embodiment of the present invention, and Fig. 1B is a partial sectional view. The analyzer shown in Fig. 1A comprises a light-emitting unit 101, the sensing element 102, a light-receiving unit 103, a converter/amplifier 104, an A/D converter 105, and an output detector 106. The light-emitting unit 101 is, e.g., an orange LED having a light-emitting wavelength of about 611 nm as a center wavelength. The light-receiving unit 103 is, e.g., a photodiode and has light-receiving sensitivity at a wavelength of, e.g., 190 to 1,000 nm. The light-emitting unit 101 and light-receiving unit 103 are so arranged that a light-emitting portion and light-receiving portion face each other.

In the analyzer having this arrangement, light emitted from the light-emitting unit 101 is incident on the sensing element 102, and light transmitted through the sensing element 102 is received by the light-receiving unit 103. Since the light transmitting state in the sensing element 102 changes in proportion to the concentration of ozone gas in the ambient, this change is detected as the change in transmitted light by the light-receiving unit 103.

The received transmitted light is photoelectrically converted by the light-receiving unit 103, and output as a signal electric current. The output signal is amplified and converted from an electric current into a voltage by the converter/amplifier 104. This signal converted into a voltage is converted into a digital signal by the A/D converter 105. Finally, the converted digital signal is output as a detection result from the output detector 106.

The sensing element 102 will be explained in more detail below. As shown in the sectional view of Fig. 1B, the sensing element 102 comprises a porous material 121 which is porous glass having a plurality of fine pores 122 having an average pore size of 4 nm, a sensing agent 123 formed in the pores 122, and a gas selective permeable film 124 so formed as to cover the surface of the porous material 121 and made of a plastic film. As the porous material 121, it is possible to use, e.g., Vycor 7930 manufactured by Corning. The chip size of the porous material 121 is 8 (mm) × 8 (mm) × 1 (mm) (thickness). Note that the porous material 121 is not limited to a plate, and can also be formed into fibers.

The sensing agent 123 contains indigo carmine disodium salt as a dye and acetic acid. When ozone (ozone gas) penetrates into the pores 122 of the sensing element 102 having the above arrangement, a carbon-carbon double bond of an indigo ring of the indigo carmine disodium salt contained in the sensing agent 123 is broken by the penetrating ozone, and this changes the absorption spectrum in the visible region. Accordingly, the color of the sensing element 102 changes. Since the dye contained in the sensing agent 123 decomposes in the presence of ozone and the state of light transmitted through the sensing element 102 changes as described above, ozone gas can be measured by this change.

In addition, the sensing element 102 shown in Fig. 1 is covered with the gas selective permeable film 124, so the penetration of nitrogen dioxide into the pores 122 is suppressed, and this makes ozone concentration measurement at higher sensitivity feasible. Consequently, the sensing element 102 shown in Fig. 1 can measure ozone at high sensitivity without being disturbed by nitrogen dioxide gas even if nitrogen dioxide gas exists.

The gas selective permeable film 124 is made of an organic polymer such as polyacrylonitrile or polymethylmethacrylate which uses, as a monomer, a compound made of a chainlike molecule containing a vinyl group, and need only have a film thickness of about 0.05 to 1 µm. If the film thickness exceeds 1 µm, ozone (ozone gas) does not easily permeate any longer. If the film thickness is 0.05 µm or less, the film condition becomes difficult to maintain.

Note that the gas selective permeable film 124 may also be made of an organic polymer which uses, as a monomer, a compound made of a chainlike molecule containing a vinyl group, such as acrylic acid, acrylonitrile, methacrylic acid, methyl methacrylate, vinyl chloride, or vinylidene chloride, or a copolymer which uses these compounds as monomers. Examples of the copolymer are an acrylonitrile-butadiene-styrene copolymer, styrene-acrylonitrile copolymer, and vinyl chloride-vinyl acetate copolymer. Note also that the gas selective permeable film 124 is made of a material having high permeability equal to or larger than a predetermined value in a wavelength region of 350 to 800 nm.

When the average pore size of the porous material 121 made of porous glass (borosilicate glass) is less than 20 nm, light is transmitted in a visible light region from 350 to 800 nm in the measurement of a transmission spectrum at a wavelength of 200 to 2,000 nm. If the average pore size exceeds 20 nm, the light transmittance in the visible region abruptly decreases. Therefore, the average pore size of the porous material 121 is preferably less than 20 nm. In particular, the porous material 121 need only be transparent at a wavelength of 350 to 800 nm. Note that the average pore size is the size which allows the entry of the sensing agent to be described below. The specific surface area of the porous material 121 is 100 m² or more per gram as a weight.

A method of manufacturing the sensing element 102 will be described below. Indigo carmine disodium salt as a dye is dissolved in water, and acetic acid is added to prepare an aqueous solution (sensing agent solution) containing 0.3% of indigo carmine disodium salt and 1 N of acetic acid. Then, the sensing agent solution is placed in a predetermined vessel, and the porous material 121 as porous glass having an average pore size of 4 nm is dipped into the sensing agent solution contained in the vessel. The dipped state is held for, e.g., 24 hrs. In this way, the pores 122 of the porous material 121 are impregnated with the sensing agent solution.

After the dipped state is held for 24 hrs, the porous material 121 is removed from the sensing agent solution and dried with air. After being dried with air to a certain degree, the porous material 121 is placed in a nitrogen gas stream and dried by holding this state for 24 hrs or more. As a consequence, the sensing agent 123 is deposited in the pores 122 of the porous material 121. The ozone gas sensing element thus obtained changes its absorbance in the presence of ozone, and can detect atmospheric-level ozone (about 10 to 120 ppb) (patent reference 1).

Subsequently, the dried sensing element 102 is dipped into a tetrahydrofuran solution in which 1% of polyacrylonitrile is dissolved. After this state is held for 30 sec, the sensing element 102 is pulled up from the tetrahydrofuran solution, and dried with air. Consequently, the sensing element 102 in which the surface of the porous material 121 is covered with the gas selective permeable film 124 is obtained. The film thickness of the formed gas selective permeable film 124 is 0.3 µm (when measured by a step height meter).

An example of ozone gas measurement using the sensing element 102 manufactured by the above method will be explained below. First, a sensing element A manufactured in the same manner as above and a sensing element B having no plastic film are prepared. The sensing element A is similar to the sensing element 102. Then, the absorbances in the direction of thickness of the sensing elements A and B are measured before they are exposed to detection target air.

Subsequently, the sensing elements A and B are exposed to detection target air in which ozone exists at 25 ppb and nitrogen dioxide gas exists on the order of ppb or less for 10 hrs. After the sensing elements A and B are exposed to the detection target air for 10 hrs, the absorbances in the direction of thickness of the sensing elements A and B are measured again. Then, the sensing elements A and B exposed for 10 hrs are exposed to the detection target air for another 10 hrs. After the sensing elements A and B are thus exposed to the detection target air for another 10 hrs, the absorbances in the direction of thickness of the sensing elements A and B are measured again.

Fig. 2 shows the results of the three-time absorbance measurement (absorbance analysis) described above. Fig. 2 shows changes in absorbance at 600 nm as the wavelength of an absorption peak in the visible region of indigo carmine disodium salt. Solid squares indicate the results of sensing element A, and solid circles indicate the results of sensing element B having no plastic film.

The absorbances of both the sensing elements A and B decrease by 0.016 at an ozone integration value of 250 ppb × hour when they are exposed to ozone. That is, similar to the uncoated sensing element B, the sensing element A covered with the plastic film reduces its absorbance by reacting with ozone, and can detect atmospheric-level ozone (about 10 to 120 ppb). Also, the absorbance reduction measured for the third time is larger than that measured for the second time, indicating that a cumulative use (measurement) is possible by both the sensing elements.

Then, new sensing elements A and B are prepared, and the absorbances in the direction of thickness of the sensing elements A and B are measured before they are exposed to detection target air. Subsequently, the sensing elements A and B are exposed
to detection target air in which ozone exists at 25 ppb and nitrogen dioxide exists at 100 ppb for 10 hrs. After the sensing elements A and B have been exposed to the detection target air for 10 hrs, the absorbances in the direction of thickness of the sensing elements A and B are measured again.

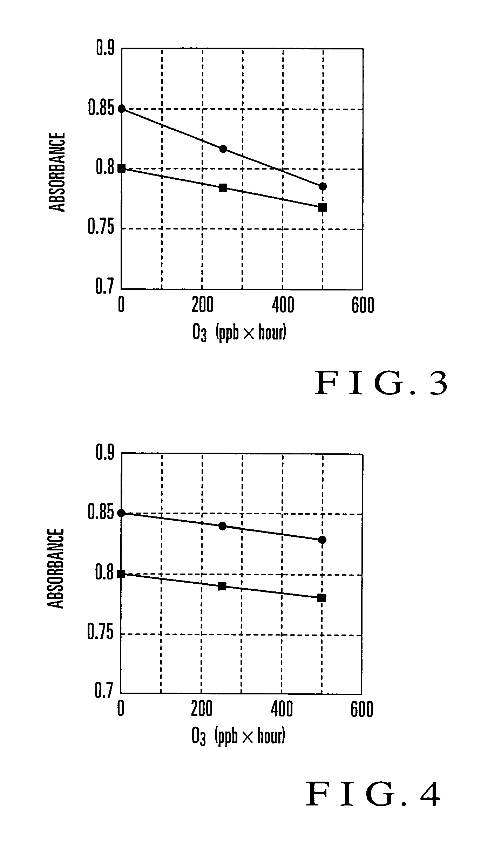

Then, the sensing elements A and B exposed for 10 hrs are exposed to the detection target air for another 10 hrs. After the sensing elements A and B are thus exposed to the detection target air for another 10 hrs, the absorbances in the direction of thickness of the sensing elements A and B are measured again. Fig. 3 shows the results of the three-time absorbance measurement (absorbance analysis) described above. Fig. 3 shows changes in absorbance at 600 nm as the wavelength of an absorption peak in the visible region of indigo carmine disodium salt. Solid squares indicate the results of the sensing element A, and solid circles indicate the results of the sensing element B having no plastic film.

Although the absorbances of both the sensing elements A and B decrease when they are exposed to ozone, the reduction amounts of the sensing elements A and B are 0.016 and 0.032, respectively, at an ozone integration value of 250 ppb × hour. That is, the reduction amount of the absorbance of the sensing element B is larger than that shown in Fig. 2. This is the influence of the coexisting nitrogen dioxide gas.

By contrast, the reduction amount of the sensing element A remains unchanged from that shown in Fig. 2, indicating that the measurement is performed at high sensitivity without being influenced by the nitrogen dioxide gas. As described above, in the sensing element A shown in Fig. 1, the gas selective permeable film 124 prevents the penetration of nitrogen dioxide existing in a measurement target ambient, so ozone can be detected at higher sensitivity while the disturbance by nitrogen dioxide is suppressed.

Another method of manufacturing the sensing element 102 will be explained below. A sensing agent solution is prepared by dissolving indigo carmine disodium salt as a dye, phosphoric acid, and a dihydrogen phosphate buffer solution in water. In this sensing agent solution, the concentration of the indigo carmine disodium salt is 0.4%, and the concentration of each of the phosphoric acid and sodium dihydrogenphosphate is 50 mmol. Then, a porous material as porous glass having an average pore size of 4 nm is dipped into the sensing agent solution. The dipped state is held for, e.g., 24 hrs. In this manner, the pores of the porous material are impregnated with the sensing agent solution.

After having been dipped for 24 hrs, the porous material is removed from the sensing agent solution and dried with air. After having been dried with air to a certain degree, the porous material is placed in a nitrogen gas stream, and dried by holding this state for 24 hrs or more. The ozone gas sensing element thus obtained changes its absorbance in the presence of ozone, and can detect atmospheric-level ozone (about 10 to 120 ppb).

Subsequently, the dried sensing element is dipped into a tetrahydrofuran solution in which 1% of polyacrylonitrile is dissolved. After this state has been held for 30 sec, the sensing element is pulled up from the tetrahydrofuran solution, and dried with air. As a consequence, a sensing element C in which the surface of the porous material is covered with a gas selective permeable film (plastic film) is obtained.

An example of ozone gas measurement using sensing element C manufactured by the above method will be explained below. First, a sensing element D having no gas selective permeable film is prepared in addition to the sensing element C. Then, the absorbances in the direction of thickness of the sensing elements C and D are measured before they are exposed to detection target air.

Subsequently, the sensing elements C and D are exposed to detection target air in which ozone exists at 25 ppb and nitrogen dioxide gas exists on the order of ppb or less for 10 hrs. After the sensing elements C and D have been exposed to the detection target air for 10 hrs, the absorbances in the direction of thickness of the sensing elements C and D are measured again. Then, the sensing elements C and D exposed for 10 hrs are exposed to the detection target air for another 10 hrs. After the sensing elements C and D have thus been exposed to the detection target air for another 10 hrs, the absorbances in the direction of thickness of the sensing elements C and D are measured again.

Fig. 4 shows the results of the three-time absorbance measurement (absorbance analysis) described above. Fig. 4 shows changes in absorbance at 600 nm as the wavelength of an absorption peak in the visible region of indigo carmine disodium salt. Solid squares indicate the results of the sensing element C, and solid circles indicate the results of the sensing element D having no gas selective permeable film.

The absorbances of both the sensing elements C and D decrease by 0.010 at an ozone integration value of 250 ppb × hour when they are exposed to ozone. That is, similar to the uncoated sensing element D, the sensing element C covered with the gas selective permeable film reduces its absorbance by reacting with ozone, and can detect atmospheric-level ozone (about 10 to 120 ppb).

Then, new sensing elements C and D are prepared, and the absorbances in the direction of thickness of the sensing elements C and D are measured before they are exposed to detection target air. Subsequently, the sensing elements C and D are exposed
to detection target air in which ozone exists at 25 ppb and nitrogen dioxide exists at 100 ppb for 10 hrs. After the sensing elements C and D have been exposed to the detection target air for 10 hrs, the absorbances in the direction of thickness of the sensing elements C and D are measured again.

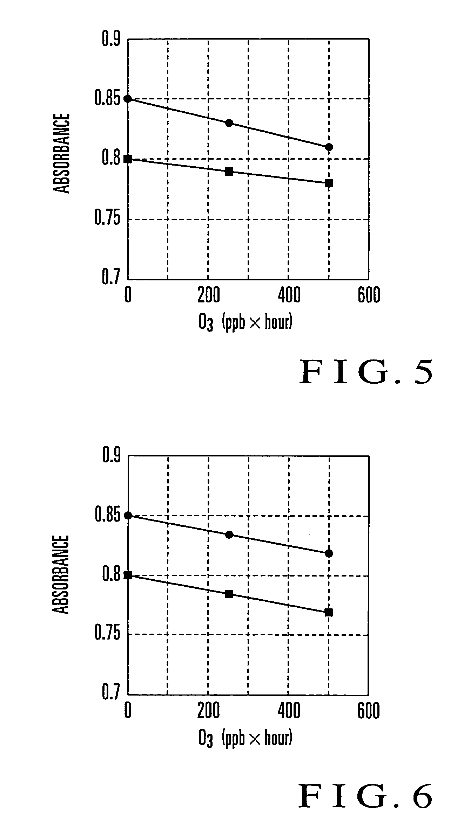

Then, the sensing elements C and D exposed for 10 hrs are exposed to the detection target air for another 10 hrs. After the sensing elements C and D have thus been exposed to the detection target air for another 10 hrs, the absorbances in the direction of thickness of the sensing elements C and D are measured again. Fig. 5 shows the results of the three-time absorbance measurement (absorbance analysis) described above. Fig. 5 shows changes in absorbance at 600 nm as the wavelength of an absorption peak in the visible region of indigo carmine disodium salt. Solid squares indicate the results of sensing element C, and solid circles indicate the results of sensing element D having no gas selective permeable film.

Although the absorbances of both the sensing elements C and D decrease when they are exposed to ozone, the reduction amounts of the sensing elements C and D are 0.010 and 0.020, respectively, at an ozone integration value of 250 ppb × hour. That is, the reduction amount of the absorbance of the sensing element D is larger than that shown in Fig. 4. This is the influence of the coexisting nitrogen dioxide gas.

By contrast, the reduction amount of the sensing element C remains unchanged from that shown in Fig. 4, indicating that the measurement is performed at high sensitivity without being influenced by the nitrogen dioxide gas. As described above, in the sensing element C, the gas selective permeable film covering the porous material prevents the penetration of nitrogen dioxide existing in a measurement target ambient, so ozone can be detected at higher sensitivity while the disturbance by nitrogen dioxide is suppressed.

### [2]

Another method of manufacturing the sensing element 102 will be described below. In the following description, a case in which the gas selective permeable film is made of a methacrylic resin such as polymethylmethacrylate (PMMA) will be explained. First, as in the above method, indigo carmine disodium salt as a dye is dissolved in water, and acetic acid is added to prepare an aqueous solution (sensing agent solution) containing 0.3% of indigo carmine disodium salt and 1 N of acetic acid. Then, a porous material as porous glass having an average pore size of 4 nm is dipped into this sensing agent solution. The dipped state is held for, e.g., 24 hrs. In this way, the pores of the porous material are impregnated with the sensing agent solution.

After the dipped state has been held for 24 hrs, the porous material is removed from the sensing agent solution and dried with air. After having been dired with air to a certain degree, the porous material is placed in a nitrogen gas stream and dried by holding this state for 24 hrs or more. The sensing element thus obtained changes its absorbance in the presence of ozone, and can detect atmospheric-level ozone (about 10 to 120 ppb).

Subsequently, the dried sensing element is dipped into an ethyl acetate solution in which 1% of PMMA having a molecular weight of 15,000 is dissolved. After this state has been held for 30 sec, the sensing element is pulled up from the ethyl acetate solution, and dried with air. Consequently, a sensing element E in which the surface of the porous material is covered with a gas selective permeable film (plastic film) made of PMMA is obtained. The film thickness of the gas selective permeable film covering the surface of the porous material is about 0.25 µm (when measured by a step height meter).

An example of ozone gas measurement using the sensing element E manufactured by the above method will be explained below. First, a sensing element F having no gas selective permeable film is prepared in addition to the sensing element E. Then, the absorbances in the direction of thickness of the sensing elements E and F are measured before they are exposed to detection target air.

Subsequently, the sensing elements E and F are exposed to detection target air in which ozone exists at 25 ppb and nitrogen dioxide gas exists on the order of ppb or less for 10 hrs. After the sensing elements E and F have been exposed to the detection target air for 10 hrs, the absorbances in the direction of thickness of the sensing elements E and F are measured again. Then, the sensing elements E and F exposed for 10 hrs are exposed to the detection target air for another 10 hrs. After the sensing elements E and F have thus been exposed to the detection target air for another 10 hrs, the absorbances in the direction of thickness of the sensing elements E and F are measured again.

Fig. 6 shows the results of the three-time absorbance measurement (absorbance analysis) described above. Fig. 6 shows changes in absorbance at 600 nm as the wavelength of an absorption peak in the visible region of indigo carmine disodium salt. Solid squares indicate the results of the sensing element E, and solid circles indicate the results of the sensing element F having no gas selective permeable film.

The absorbances of both the sensing elements E and F decrease by 0.016 at an ozone integration value of 250 ppb × hour when they are exposed to ozone. That is, similar to the uncoated sensing element F, the sensing element E covered with the gas selective permeable film reduces its absorbance by reacting with ozone, and can detect atmospheric-level ozone (about 10 to 120 ppb). Also, the absorbance measured for the third time is smaller than that measured for the second time, indicating that a cumulative use (measurement) is possible.

Then, new sensing elements E and F are prepared, and the absorbances in the direction of thickness of the sensing elements E and F are measured before they are exposed to detection target air. Subsequently, the sensing elements E and F are exposed
to detection target air in which ozone exists at 25 ppb and nitrogen dioxide exists at 100 ppb for 10 hrs. After the sensing elements E and F have been exposed to the detection target air for 10 hrs, the absorbances in the direction of thickness of the sensing elements E and F are measured again.

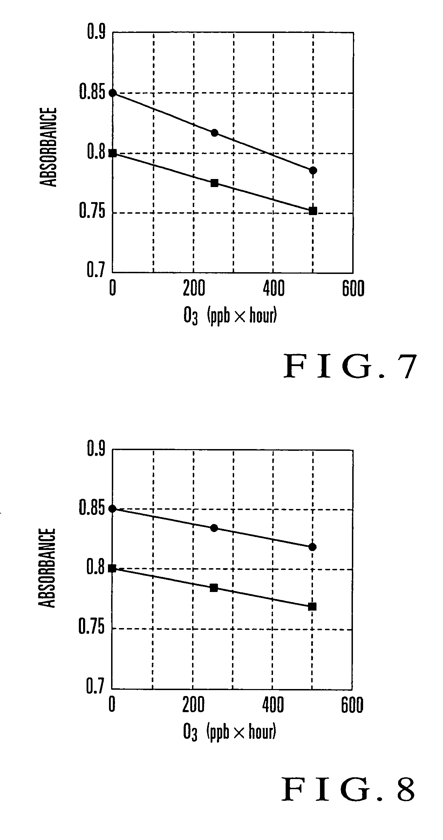

Then, the sensing elements E and F exposed for 10 hrs are exposed to the detection target air for another 10 hrs. After the sensing elements E and F have thus been exposed to the detection target air for another 10 hrs, the absorbances in the direction of thickness of the sensing elements E and F are measured again. Fig. 7 shows the results of the three-time absorbance measurement (absorbance analysis) described above. Fig. 7 shows changes in absorbance at 600 nm as the wavelength of an absorption peak in the visible region of indigo carmine disodium salt. Solid squares indicate the results of the sensing element E, and solid circles indicate the results of the sensing element F having no gas selective permeable film.

Although the absorbances of both the sensing elements E and F decrease when they are exposed to ozone, the reduction amounts of the sensing elements E and F are 0.024 and 0.032, respectively, at an ozone integration value of 250 ppb × hour. That is, the absorbance reduction amounts of the sensing elements E and F are larger than those shown in Fig. 6, and particularly the reduction amount of the sensing element F is large. This is the influence of the coexisting nitrogen dioxide gas.

The reduction amount of the sensing element E, however, is smaller than that of the sensing element F, indicating that the influence of the nitrogen dioxide gas is reduced. The relative sensitivity of nitrogen dioxide to ozone in the sensing element F is 0.25, and the relative sensitivity of nitrogen dioxide to ozone in the sensing element E is 0.125. Note that the relative sensitivity is a relative value of the absorbance reduction amount when a sensing element is exposed to nitrogen dioxide at a certain concentration, with respect to 1 as the absorbance reduction amount when the sensing element is exposed to ozone at the same concentration. In the above case, comparison with the detection results of the element having no gas selective permeable film shows that the invasion of nitrogen dioxide is reduced to 50% (= (0.024 - 0.016)÷ (0.032 - 0.016) × 100). In sensing element E as described above, the gas selective permeable film covering the porous material prevents easy penetration of nitrogen dioxide in a measurement target ambient, so ozone can be detected at higher sensitivity while the disturbance by nitrogen dioxide is suppressed.

Another sensing element using a gas selective permeable film made of PMMA will be described below. First, a method of manufacturing the element will be explained. First, as in the above method, indigo carmine disodium salt as a dye is dissolved in water, and acetic acid is added to prepare an aqueous solution (sensing agent solution) containing 0.3% of indigo carmine disodium salt and 1 N of acetic acid. Then, a porous material as porous glass having an average pore size of 4 nm is dipped into this sensing agent solution. The dipped state is held for, e.g., 24 hrs. In this way, the pores of the porous material are impregnated with the sensing agent solution.

After the dipped state has been held for 24 hrs, the porous material is removed from the sensing agent solution and dried with air. After having been dried with air to a certain degree, the porous material is placed in a nitrogen gas stream and dried by holding this state for 24 hrs or more. The sensing element thus obtained changes its absorbance in the presence of ozone, and can detect atmospheric-level ozone (about 10 to 120 ppb).

Subsequently, the dried sensing element is dipped into an ethyl acetate solution in which 1% of PMMA having a molecular weight of 120,000 is dissolved. After this state is held for 30 sec, the sensing element is pulled up from the ethyl acetate solution, and dried with air. Consequently, a sensing element G in which the surface of the porous material is covered with a gas selective permeable film (plastic film) made of PMMA is obtained. The film thickness of the gas selective permeable film covering the surface of the porous material is about 0.45 µm (when measured by a step height meter).

An example of ozone gas measurement using the sensing element G manufactured by the above method will be explained below. First, a sensing element H having no gas selective permeable film is prepared in addition to the sensing element E. Then, the absorbances in the direction of thickness of the sensing elements G and H are measured before they are exposed to detection target air.

Subsequently, the sensing elements G and H are exposed to detection target air in which ozone exists at 25 ppb and nitrogen dioxide gas exists on the order of ppb or less for 10 hrs. After the sensing elements G and H have been exposedto the detection target air for 10 hrs, the absorbances in the direction of thickness of the sensing elements G and H are measured again. Then, the sensing elements G and H exposed for 10 hrs are exposed to the detection target air for another 10 hrs. After the sensing elements G and H have thus been exposed to the detection target air for another 10 hrs, the absorbances in the direction of thickness of the sensing elements G and H are measured again.

Fig. 8 shows the results of the three-time absorbance measurement (absorbance analysis) described above. Fig. 8 shows changes in absorbance at 600 nm as the wavelength of an absorption peak in the visible region of indigo carmine disodium salt. Solid squares indicate the results of the sensing element G, and solid circles indicate the results of the sensing element H having no gas selective permeable film.

The absorbances of both the sensing elements G and H decrease by 0.016 at an ozone integration value of 250 ppb × hour when they are exposed to ozone. That is, similar to the uncoated sensing element H, the sensing element G covered with the gas selective permeable film reduces its absorbance by reacting with ozone, and can detect atmospheric-level ozone (about 10 to 120 ppb). Also, the absorbance measured for the third time is smaller than that measured for the second time, indicating that a cumulative use (measurement) is possible.

Then, new sensing elements G and H are prepared, and the absorbances in the direction of thickness of the sensing elements G and H are measured before they are exposed to detection target air. Subsequently, the sensing elements G and H are exposed
to detection target air in which ozone exists at 25 ppb and nitrogen dioxide exists at 100 ppb for 10 hrs. After the sensing elements G and H have been exposed to the detection target air for 10 hrs, the absorbances in the direction of thickness of the sensing elements G and H are measured again.

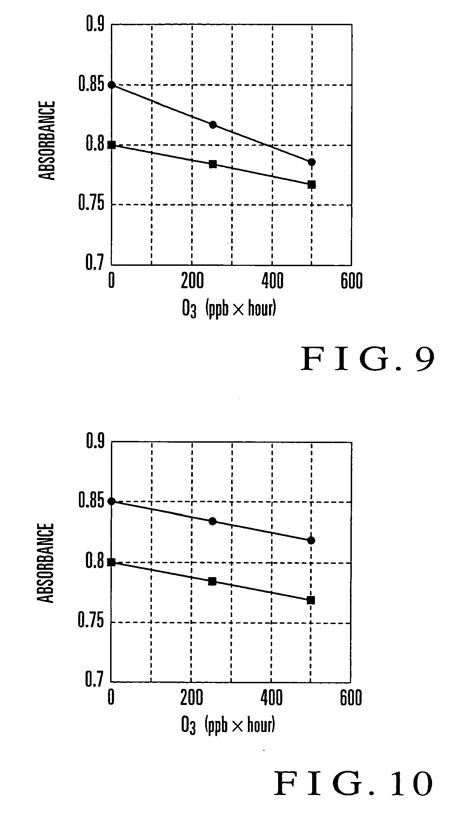

Then, the sensing elements G and H exposed for 10 hrs are exposed to the detection target air for another 10 hrs. After the sensing elements G and H have thus been exposed to the detection target air for another 10 hrs, the absorbances in the direction of thickness of the sensing elements G and H are measured again. Fig. 9 shows the results of the three-time absorbance measurement (absorbance analysis) described above. Fig. 9 shows changes in absorbance at 600 nm as the wavelength of an absorption peak in the visible region of indigo carmine disodium salt. Solid squares indicate the results of the sensing element G, and solid circles indicate the results of the sensing element H having no gas selective permeable film.

Although the absorbances of both the sensing elements G and H decrease when they are exposed to ozone, the reduction amounts of the sensing elements G and H are 0.017 and 0.032, respectively, at an ozone integration value of 250 ppb × hour. That is, the absorbance reduction amounts of the sensing elements G and H are larger than those shown in Fig. 8. This is the influence of the coexisting nitrogen dioxide gas. However, the reduction amount of the sensing element G only slightly increases from that shown in Fig. 8, whereas the reduction amount of the sensing element H largely increases from that shown in Fig. 8.

As described above, the change of the sensing element G is small between the cases shown in Figs. 8 and 9, indicating that the influence of nitrogen dioxide gas is reduced more than that when sensing elements E and F are compared. The relative sensitivity of nitrogen dioxide to ozone in sensing element H is 0.25, and the relative sensitivity of nitrogen dioxide to ozone in sensing element G is 0.0156. In this case, the comparison with the detection results of the element having no gas selective permeable film shows that the invasion of nitrogen dioxide is reduced to about 6% (≒ (0.017 - 0.016) ÷ (0.032 - 0.016) × 100). In sensing element G as described above, the gas selective permeable film covering the porous material prevents easy penetration of nitrogen dioxide in a measurement target ambient, so ozone can be detected at higher sensitivity while the disturbance by nitrogen dioxide is suppressed. Also, this effect is larger than that of sensing element E.

Still another sensing element using a gas selective permeable film made of PMMA will be described below. First, a method of manufacturing the element will be explained. First, as in the above method, indigo carmine disodium salt as a dye is dissolved in water, and acetic acid is added to prepare an aqueous solution (sensing agent solution) containing 0.3% of indigo carmine disodium salt and 1 N of acetic acid. Then, a porous material as porous glass having an average pore size of 4 nm is dipped into this sensing agent solution. The dipped state is held for, e.g., 24 hrs. In this manner, the pores of the porous material are impregnated with the sensing agent solution.

After the dipped state has been held for 24 hrs, the porous material is removed from the sensing agent solution and dried with air. After having been dried with air to a certain degree, the porous material is placed in a nitrogen gas stream and dried by holding this state for 24 hrs or more. The sensing element thus obtained changes its absorbance in the presence of ozone, and can detect atmospheric-level ozone (about 10 to 120 ppb).

Subsequently, the dried sensing element is dipped into an ethyl acetate solution in which 1% of PMMA having a molecular weight of 960,000 is dissolved. After this state has been held for 30 sec, the sensing element is pulled up from the ethyl acetate solution, and dried with air. Consequently, a sensing element I in which the surface of the porous material is covered with a gas selective permeable film (plastic film) made of PMMA is obtained. The film thickness of the gas selective permeable film covering the surface of the porous material is about 0.5 µm (when measured by a step height meter).

An example of ozone gas measurement using the sensing element I manufactured by the above method will be explained below. First, a sensing element J having no gas selective permeable film is prepared in addition to sensing element I. Then, the absorbances in the direction of thickness of the sensing elements I and J are measured before they are exposed to detection target air.

Subsequently, the sensing elements I and J are exposed to detection target air in which ozone exists at 25 ppb and nitrogen dioxide gas exists on the order of ppb or less for 10 hrs. After the sensing elements I and J have been exposed to the detection target air for 10 hrs, the absorbances in the direction of thickness of the sensing elements I and J are measured again. Then, the sensing elements I and J exposed for 10 hrs are exposed to the detection target air for another 10 hrs. After the sensing elements I and J have thus been exposed to the detection target air for another 10 hrs, the absorbances in the direction of thickness of the sensing elements I and J are measured again.

Fig. 10 shows the results of the three-time absorbance measurement (absorbance analysis) described above. Fig. 10 shows changes in absorbance at 600 nm as the wavelength of an absorption peak in the visible region of indigo carmine disodium salt. Solid squares indicate the results of the sensing element I, and solid circles indicate the results of the sensing element J having no gas selective permeable film.

The absorbances of both the sensing elements I and J decrease by 0.016 at an ozone integration value of 250 ppb × hour when they are exposed to ozone. That is, similar to the uncoated sensing element J, the sensing element I covered with the gas selective permeable film reduces its absorbance by reacting with ozone, and can detect atmospheric-level ozone (about 10 to 120 ppb). Also, the absorbance measured for the third time is smaller than that measured for the second time, indicating that a cumulative use (measurement) is possible.

Then, new sensing elements I and J are prepared, and the absorbances in the direction of thickness of the sensing elements I and J are measured before they are exposed to detection target air. Subsequently, the sensing elements I and J are exposed
to detection target air in which ozone exists at 25 ppb and nitrogen dioxide exists at 100 ppb for 10 hrs. After the sensing elements I and J have been exposed to the detection target air for 10 hrs, the absorbances in the direction of thickness of the sensing elements I and J are measured again.

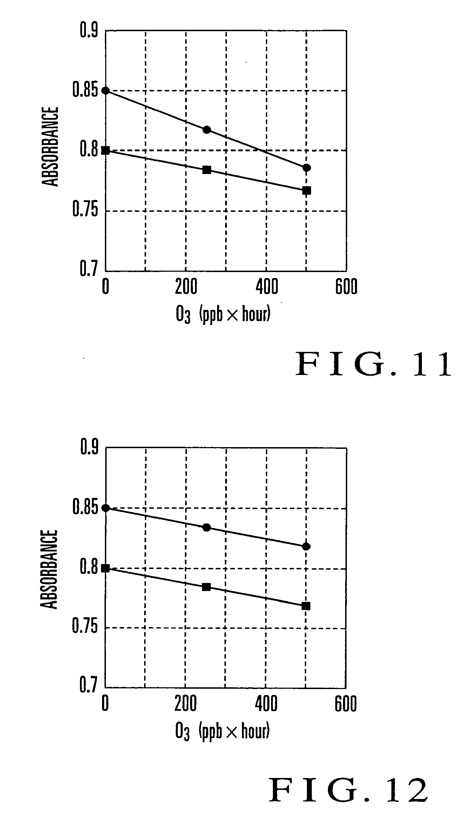

Then, the sensing elements I and J exposed for 10 hrs are exposed to the detection target air for another 10 hrs. After the sensing elements I and J have thus been exposed to the detection target air for another 10 hrs, the absorbances in the direction of thickness of the sensing elements I and J are measured again. Fig. 11 shows the results of the three-time absorbance measurement (absorbance analysis) described above. Fig. 11 shows changes in absorbance at 600 nm as the wavelength of an absorption peak in the visible region of indigo carmine disodium salt. Solid squares indicate the results of the sensing element I, and solid circles indicate the results of the sensing element J having no gas selective permeable film.

Although the absorbances of both the sensing elements I and J decrease when they are exposed to ozone, the reduction amounts of the sensing elements I and J are 0.016 and 0.032, respectively, at an ozone integration value of 250 ppb × hour. That is, the absorbance reduction amount of the sensing element J is larger than that shown in Fig. 10. This is the influence of the coexisting nitrogen dioxide gas. In this case, the relative sensitivity of nitrogen dioxide to ozone is 0.25. By contrast, the sensing element I has almost no difference from case shown in Fig. 10.

As described above, the sensing element I is hardly influenced by nitrogen dioxide gas. In sensing element I as described above, the gas selective permeable film covering the porous material allows almost no invasion of nitrogen dioxide in a measurement target ambient, so ozone can be detected at higher sensitivity while the disturbance by nitrogen dioxide is suppressed. As has been explained above, when the gas selective permeable film is made of PMMA, the larger the molecular weight of PMMA, the larger the effect of suppressing the disturbance by nitrogen dioxide. The results obtained by molecular weights of 15,000, 120,000, and 960,000 indicate that the invasion of nitrogen dioxide gas is suppressed to about 6% when the molecular weight is 120,000, so the invasion of nitrogen dioxide can be suppressed by 93% or more when the molecular weight is 100,000 or more.

Although the sensing agent 123 is made of indigo carmine disodium salt as a dye in the above description, the material is not limited to this material. It is also possible to use, e.g., indigo, indigo carmine dipotassium salt, or indigo red.

For comparison, a sensing element in which the porous material 121 (Fig. 1) is covered with a plastic film (polystyrene film) made of polystyrene will be described below. First, the manufacture of the sensing element covered with the polystyrene film will be explained. First, the porous material 121 in which the sensing agent 123 is formed in the pores 122 is prepared in the same manner as above.

Then, the dried porous material 121 is dipped into an ethyl acetate solution in which 1% of polystyrene is dissolved, and this state is held for 20 sec. Subsequently, the porous material 121 is pulled up from the acetic acid solution, and the sensing element 102 is dried with air. As a consequence, the sensing element in which the surface of the porous material 121 is covered with a polystyrene film is obtained. The film thickness of the formed polystyrene film is 0.25 µm (when measured by a step height meter).

An example of ozone gas measurement using the sensing element manufactured by the above method and covered with the polystyrene film will be explained below. First, a sensing element K manufactured in the same manner as above and a sensing element L having no polystyrene film are prepared. The sensing element K is similar to the sensing element. Then, the absorbances in the direction of thickness of the sensing elements K and L are measured before they are exposed to detection target air.

Subsequently, the sensing elements K and L are exposed to detection target air in which ozone exists at 25 ppb and nitrogen dioxide gas exists on the order of ppb or less for 10 hrs. After the sensing elements K and L have been exposed to the detection target air for 10 hrs, the absorbances in the direction of thickness of the sensing elements K and L are measured again. Then, the sensing elements K and L exposed for 10 hrs are exposed to the detection target air for another 10 hrs. After the sensing elements K and L have thus been exposed to the detection target air for another 10 hrs, the absorbances in the direction of thickness of the sensing elements K and L are measured again.

Fig. 12 shows the results of the three-time absorbance measurement (absorbance analysis) described above. Fig. 12 shows changes in absorbance at 600 nm as the wavelength of an absorption peak in the visible region of indigo carmine disodium salt. Solid squares indicate the results of the sensing element K, and solid circles indicate the results of the sensing element L having no polystyrene film.

The absorbances of both the sensing elements K and L decrease by 0.016 at an ozone integration value of 250 ppb × hour when they are exposed to ozone. That is, similar to the uncoated sensing element L, the sensing element K covered with the polystyrene film reduces its absorbance by reacting with ozone, and can detect atmospheric-level ozone (about 10 to 120 ppb). Also, the absorbance reduction measured for the third time is larger than that measured for the second time, indicating that a cumulative use (measurement) is possible by both the sensing elements.

Then, new sensing elements K and L are prepared, and the absorbances in the direction of thickness of the sensing elements K and L are measured before they are exposed to detection target air. Subsequently, the sensing elements K and L are exposed
to detection target air in which ozone exists at 25 ppb and nitrogen dioxide exists at 100 ppb for 10 hrs. After the sensing elements K and L have been exposed to the detection target air for 10 hrs, the absorbances in the direction of thickness of the sensing elements K and L are measured again.

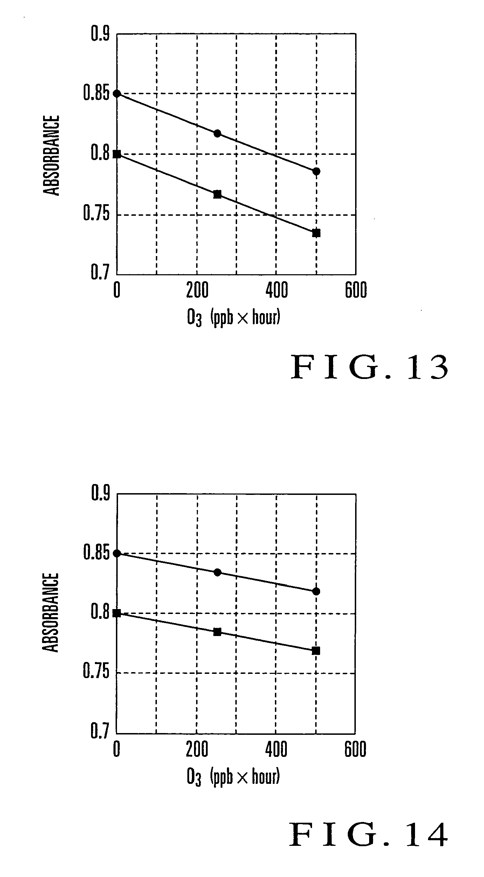

Then, the sensing elements K and L exposed for 10 hrs are exposed to the detection target air for another 10 hrs. After the sensing elements K and L have thus been exposed to the detection target air for another 10 hrs, the absorbances in the direction of thickness of the sensing elements K and L are measured again. Fig. 13 shows the results of the three-time absorbance measurement (absorbance analysis) described above. Fig. 13 shows changes in absorbance at 600 nm as the wavelength of an absorption peak in the visible region of indigo carmine disodium salt. Solid squares indicate the results of the sensing element K, and solid circles indicate the results of the sensing element L having no polystyrene film.

The absorbances of both the sensing elements K and L decrease when they are exposed to ozone. However, the reduction amounts of both the sensing elements K and L are 0.032 at an ozone integration value of 250 ppb × hour. This is the influence of nitrogen dioxide gas contained in the measurement target gas, and both the sensing elements K and L are influenced by nitrogen dioxide gas. As described above, no effect of selective permeability can be obtained by the polystyrene film.

Another comparison using polystyrene will be described below. First, the manufacture of another sensing element covered with a polystyrene film will be explained. First, the porous material 121 in which a sensing agent is formed in pores is prepared in the same manner as above. Then, the dried porous material 121 is dipped into an ethyl acetate solution in which 1% of polystyrene having a molecular weight of 250,000 is dissolved, and this state is held for 30 sec. Subsequently, the porous material 121 is pulled up from the acetic acid solution, and the sensing element 102 is dried with air. As a consequence, a sensing element in which the surface of the porous material 121 is covered with a polystyrene film is obtained. The film thickness of the formed polystyrene film is 0.45 µm (when measured by a step height meter).

An example of ozone gas measurement using the sensing element manufactured by the above method and covered with the polystyrene film will be explained below. First, a sensing element M manufactured in the same manner as above and a sensing element N having no polystyrene film are prepared. The sensing element M is similar to the sensing element. Then, the absorbances in the direction of thickness of the sensing elements M and N are measured before they are exposed to detection target air.

Subsequently, the sensing elements M and N are exposed to detection target air in which ozone exists at 25 ppb and nitrogen dioxide gas exists on the order of ppb or less for 10 hrs. After the sensing elements M and N have been exposed to the detection target air for 10 hrs, the absorbances in the direction of thickness of the sensing elements M and N are measured again. Then, the sensing elements M and N exposed for 10 hrs are exposed to the detection target air for another 10 hrs. After the sensing elements M and N have thus been exposed to the detection target air for another 10 hrs, the absorbances in the direction of thickness of the sensing elements M and N are measured again.

Fig. 14 shows the results of the three-time absorbance measurement (absorbance analysis) described above. Fig. 14 shows changes in absorbance at 600 nm as the wavelength of an absorption peak in the visible region of indigo carmine disodium salt. Solid squares indicate the results of the sensing element M, and solid circles indicate the results of the sensing element N having no polystyrene film.

The absorbances of both the sensing elements M and N decrease by 0.016 at an ozone integration value of 250 ppb × hour when they are exposed to ozone. That is, similar to the uncoated sensing element N, the sensing element M covered with the polystyrene film reduces its absorbance by reacting with ozone, and can detect atmospheric-level ozone (about 10 to 120 ppb). Also, the absorbance reduction measured for the third time is larger than that measured for the second time, indicating that a cumulative use (measurement) is possible by both the sensing elements.

Then, new sensing elements M and N are prepared, and the absorbances in the direction of thickness of the sensing elements M and N are measured before they are exposed to detection target air. Subsequently, the sensing elements M and N are exposed
to detection target air in which ozone exists at 25 ppb and nitrogen dioxide exists at 100 ppb for 10 hrs. After the sensing elements M and N have been exposed to the detection target air for 10 hrs, the absorbances in the direction of thickness of the sensing elements M and N are measured again.

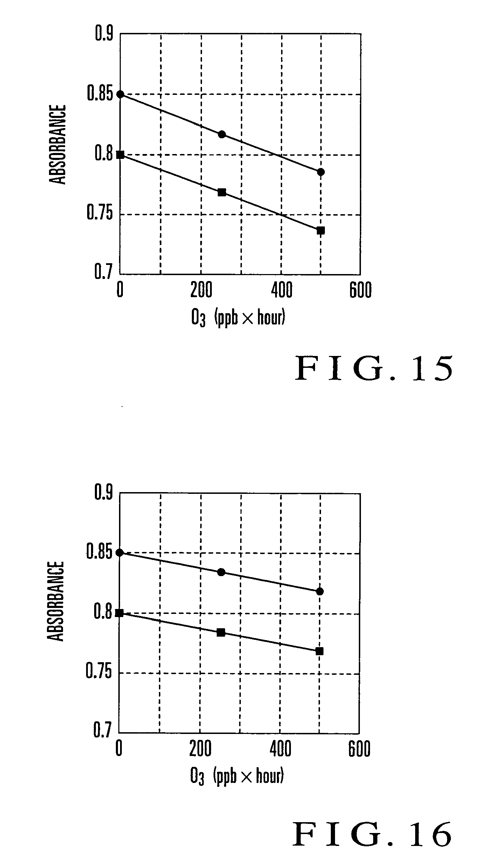

Then, the sensing elements M and N exposed for 10 hrs are exposed to the detection target air for another 10 hrs. After the sensing elements M and N have thus been exposed to the detection target air for another 10 hrs, the absorbances in the direction of thickness of the sensing elements M and N are measured again. Fig. 15 shows the results of the three-time absorbance measurement (absorbance analysis) described above. Fig. 15 shows changes in absorbance at 600 nm as the wavelength of an absorption peak in the visible region of indigo carmine disodium salt. Solid squares indicate the results of sensing element M, and solid circles indicate the results of sensing element N having no polystyrene film.

The absorbances of both the sensing elements M and N decrease when they are exposed to ozone. However, the reduction amounts of both the sensing elements M and N are 0.032 at an ozone integration value of 250 ppb × hour. This is the influence of nitrogen dioxide gas contained in the measurement target air, and both the sensing elements M and N are influenced by nitrogen dioxide gas. As described above, no effect of selective permeability can be obtained by the polystyrene film, as in the comparative example described above.

For comparison, a sensing element in which the porous material 121 (Fig. 1) is covered with a plastic film (polyvinylalcohol film) made of polyvinylalcohol will be described below. First, the manufacture of the sensing element covered with the polyvinylalcohol film will be explained. First, the porous material 121 in which the sensing agent 123 is formed in the pores 122 is prepared in the same manner as above.

Then, the dried porous material 121 is dipped into hot water in which 1% of polyvinylalcohol is dissolved, and this state is held for 20 sec. Subsequently, the porous material 121 is pulled up from the hot water, and the sensing element 102 is dried with air. As a consequence, a sensing element in which the surface of the porous material 121 is covered with a polyvinylalcohol film is obtained. The film thickness of the formed polyvinylalcohol film is 0.2 µm (when measured by a step height meter).

An example of ozone gas measurement using the sensing element manufactured by the above method and covered with the polyvinylalcohol film will be explained below. First, a sensing element O manufactured in the same manner as above and a sensing element P having no polyvinylalcohol film are prepared. The sensing element O is similar to the sensing element. Then, the absorbances in the direction of thickness of the sensing elements O and P are measured before they are exposed to detection target air.

Subsequently, the sensing elements O and P are exposed : to detection target air in which ozone exists at 25 ppb and nitrogen dioxide gas exists on the order of ppb or less for 10 hrs. After the sensing elements O and P have been exposed to the detection target air for 10 hrs, the absorbances in the direction of thickness of the sensing elements O and P are measured again. Then, the sensing elements O and P exposed for 10 hrs are exposed to the detection target air for another 10 hrs. After the sensing elements O and P have thus been exposed to the detection target air for another 10 hrs, the absorbances in the direction of thickness of the sensing elements O and P are measured again.

Fig. 16 shows the results of the three-time absorbance measurement (absorbance analysis) described above. Fig. 16 shows changes in absorbance at 600 nm as the wavelength of an absorption peak in the visible region of indigo carmine disodium salt. Solid squares indicate the results of the sensing element 0, and solid circles indicate the results of the sensing element P having no polyvinylalcohol film.

The absorbances of both the sensing elements O and P decrease by 0.016 at an ozone integration value of 250 ppb × hour when they are exposed to ozone. That is, similar to the uncoated sensing element P, the sensing element O covered with the polyvinylalcohol film reduces its absorbance by reacting with ozone, and can detect atmospheric-level ozone (about 10 to 120 ppb). Also, the absorbance reduction measured for the third time is larger than that measured for the second time, indicating that a cumulative use (measurement) is possible by both the sensing elements.

Then, new sensing elements O and P are prepared, and the absorbances in the direction of thickness of the sensing elements O and P are measured before they are exposed to detection target air. Subsequently, the sensing elements O and P are exposed
to detection target air in which ozone exists at 25 ppb and nitrogen dioxide exists at 100 ppb for 10 hrs. After the sensing elements O and P have been exposed to the detection target air for 10 hrs, the absorbances in the direction of thickness of the sensing elements O and P are measured again.

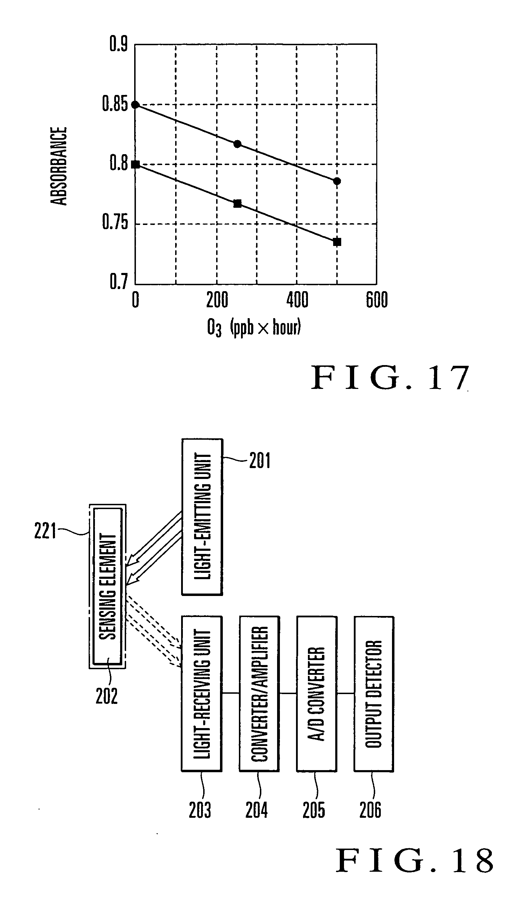

Then, the sensing elements O and P exposed for 10 hrs are exposed to the detection target air for another 10 hrs. After the sensing elements O and P have thus been exposed to the detection target air for another 10 hrs, the absorbances in the direction of thickness of the sensing elements O and P are measured again. Fig. 17 shows the results of the three-time absorbance measurement (absorbance analysis) described above. Fig. 17 shows changes in absorbance at 600 nm as the wavelength of an absorption peak in the visible region of indigo carmine disodium salt. Solid squares indicate the results of the sensing element O, and solid circles indicate the results of the sensing element P having no polyvinylalcohol film.

The absorbances of both the sensing elements O and P decrease when they are exposed to ozone. However, the reduction amounts of both the sensing elements O and P are 0.032 at an ozone integration value of 250 ppb × hour. This is presumably the influence of the coexisting nitrogen dioxide gas. As described above, no effect of selective permeability between ozone (ozone gas) and nitrogen dioxide (nitrogen dioxide gas) can be obtained by the polyvinylalcohol film.

It is found by measurements that a 25-µm thick polyacrylonitrile film has an oxygen permeability of 12 ml/m²·24h/atm, a carbon dioxide permeability of 25 ml/m²·24h/atm, and a water vapor (H₂O) permeability of 82 ml/m²·24h/atm (Testing Methods and Evaluation Results of Various Characteristics of Plastic Materials (5), Plastic Vol. 51(6), 119(2002)). It is also found by measurements that a 50-µm thick PMMA film has an oxygen permeability of 150 ml/m²·24h/atm and a water vapor (H₂O) permeability of 41 ml/m²·24h/atm (Testing Methods and Evaluation Results of Various Characteristics of Plastic Materials (5), Plastic Vol. 51(6), 119(2002)).

On the other hand, it is found by measurements that a 25-µm thick polystyrene film has an oxygen permeability of 8,100 ml/m²·24h/atm, a carbon dioxide permeability of 37,000 ml/m²·24h/atm, and a water vapor permeability of 120 ml/m²·24h/atm (Testing Methods and Evaluation Results of Various Characteristics of Plastic Materials (5), Plastic Vol. 51(6), 119(2002)). It is also found by measurements that a 25-µm thick polyvinylalcohol film has a water vapor permeability of 4,400 ml/m²·24h/atm, and a 25-µm thick polyvinyl chloride film has an oxygen permeability of 125 ml/m²·24h/atm, a carbon dioxide permeability of 760 m1/m²·24h/atm, and a water vapor permeability of 45 ml/m²·24h/atm (Testing Methods and Evaluation Results of Various Characteristics of Plastic Materials (5), Plastic Vol. 51(6), 119 (2002)).

Of these plastic films, a polyacrylonitrile film, polyvinyl chloride film, and PMMA film can be used as the gas selective permeable film 124 shown in Fig. 1, and can suppress the penetration of nitrogen dioxide gas into the pores 122 as described above. By contrast, it is found by observation as described above that a polystyrene film and polyvinylalcohol film has no tendency to suppress the penetration of nitrogen dioxide (nitrogen dioxide gas). Polystyrene has a cyclic structure and has no strong polarity, and this probably allows easy permeation of nitrogen dioxide. Also, a polyvinylalcohol film has water solubility, and this presumably makes it impossible to obtain selective permeability between ozone gas and nitrogen dioxide gas.

### [3]

Another sensing element according to an embodiment of the present invention will be explained below. Fig. 18 is a view showing an example of the arrangement of an ozone gas analyzer using a sensing element 202 according to the embodiment of the present invention. The analyzer shown in Fig. 18 has a light-emitting unit 201, the sensing element 202, a light-receiving unit 203, a converter/amplifier 204, an A/D converter 205, and an output detector 206. The light-emitting unit 201 is, e.g., an orange LED having a light-emitting wavelength of about 611 nm as a center wavelength. The light-receiving unit 203 is, e.g., a photodiode and has light-receiving sensitivity at a wavelength of, e.g., 190 to 1,000 nm. The light-receiving unit 203 is so positioned as to receive light-source light emitted from the light-emitting unit 201 and reflected by the sensing element 202, and the light-emitting unit 201 and light-receiving unit 203 are arranged on the same side with respect to the sensing element 202.

In the analyzer having this arrangement, light emitted from the light-emitting unit 201 enters the sensing element 202, and light reflected by the sensing element 202 is received by the light-receiving unit 203. Since the light reflecting state in the sensing element 202 changes in proportion to the concentration of ozone gas in the ambient, this change is detected as the change in reflected light by the light-receiving unit 203.

The received reflected light is photoelectrically converted by the light-receiving unit 203, and output as a signal electric current. The output signal is amplified and converted from an electric current into a voltage by the converter/amplifier 204. This signal converted into a voltage is converted into a digital signal by the A/D converter 205. Finally, the converted digital signal is output as a detection result from the output detector 206.

The sensing element 202 will be explained in more detail below. The sensing element 202 is made of, e.g., a sheet-like porous material made up of fibers such as cellulose. The sensing element 202 may also be made of porous glass, similar to the sensing element 102, having a reflecting surface as one surface. Alternatively, the sensing element 202 may be made of porous glass having suppressed light transmittance. The sensing element 202 need only be an element by which a change in color of a sensing agent carried in a plurality of pores can be checked by reflection. The sensing element 202 has as its carrier a porous material having a plurality of pores in which the sensing agent similar to that described above is formed, and has surfaces covered with a gas selective permeable film 221. Note that the sensing agent contains indigo carmine disodium salt as a dye and acetic acid.

When ozone (ozone gas) penetrates into the pores of the sensing element 202 having the above arrangement, a carbon-carbon double bond of an indigo ring of indigo carmine disodium salt contained in the sensing agent is broken by the penetrating ozone, and this changes the absorption spectrum in the visible region. Accordingly, the color of the sensing element 202 changes. Since the dye contained in the sensing agent decomposes in the presence of ozone and the state of light reflected by the sensing element 202 changes as described above, ozone gas can be measured by this change.

In addition, the sensing element 202 shown in Fig. 18 is covered with the gas selective permeable film 221, so the penetration of nitrogen dioxide into the pores of the sensing element 202 is suppressed. The gas selective permeable film 221 is similar to the gas selective permeable film 124 shown in Fig. 1B. As a consequence, like the sensing element 102 shown in Fig. 1, the sensing element 202 shown in Fig. 18 can measure ozone without being disturbed by nitrogen dioxide gas even when nitrogen dioxide gas exists.

A method of manufacturing the sensing element 202 will be described below. Indigo carmine disodium salt as a dye is dissolved in water, and acetic acid is added to prepare an aqueous solution (sensing agent solution) containing 0.1% of indigo carmine disodium salt and 1 N of acetic acid. Then, the sensing agent solution is placed in a predetermined vessel, and a porous material which is cellulose filter paper (No. 2) made of ADVANTEC (Toyo Roshi) is dipped into the sensing agent solution contained in the vessel. The dipped state is held for, e.g., 1 min. In this way, the pores of the porous material are impregnated with the sensing agent solution.

After the dipped state has been held for 1 min, the porous material (filter paper) is removed from the sensing agent solution and dried with air. After having been dried with air to a certain degree, the porous material is placed in a nitrogen gas stream and dried by holding this state for 24 hrs or more. As a consequence, the sensing agent is deposited in the pores of the porous material. The sensing element thus obtained changes its light reflecting state in the presence of ozone, and can detect atmospheric-level ozone (about 10 to 120 ppb).

Subsequently, the dried sensing element 202 is dipped into an ethyl acetate solution in which 10% of PMMA having a molecular weight of 960,000 are dissolved. After this state has been held for 30 sec, the sensing element 202 is pulled up from the ethyl acetate solution, and dried with air. Consequently, the sensing element 202 in which the surface of the porous material is covered with the gas selective permeable film 221 is obtained.

An example of ozone gas measurement using a sensing element Q (the sensing element 202) manufactured by the above method will be explained below. First, a sensing element R having no gas selective permeable film is prepared in addition to the sensing element Q. Then, the reflectances of the sensing elements Q and R are measured before they are exposed to detection target air. In the following description, the minus log of the reflectance is defined as the reflection absorbance of the sensing element.

Subsequently, the sensing elements Q and R are exposed to detection target air in which ozone gas exists at 50 ppb and nitrogen dioxide gas exists on the order of ppb or less for 10 hrs. After the sensing elements Q and R have been exposed to the detection target air for 10 hrs, the reflection absorbances of the sensing elements Q and R are measured again. Then, the sensing elements Q and R exposed for 10 hrs are exposed to the detection target air for another 10 hrs. After the sensing elements Q and R have thus been exposed to the detection target air for another 10 hrs, the reflection absorbances of the sensing elements Q and R are measured again.

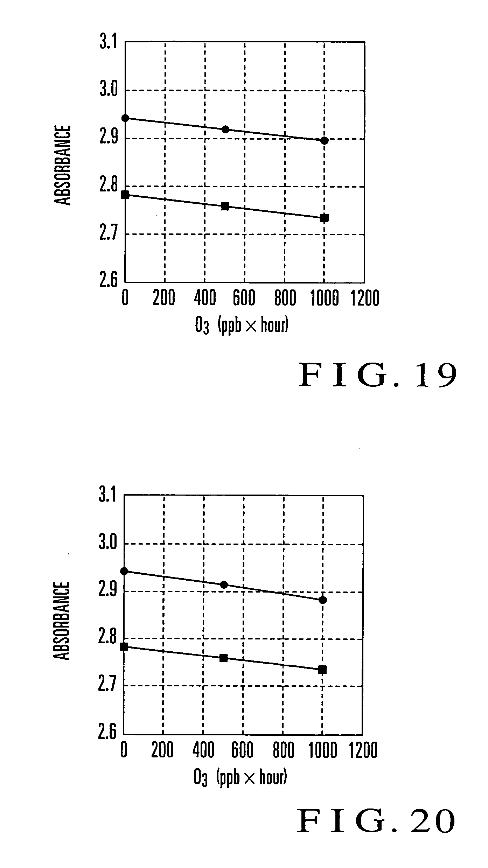

Fig. 19 shows the results of the three-time reflection absorbance measurement described above. Fig. 19 shows changes in reflection absorbance at 610 nm as the wavelength of an absorption peak in the visible region of indigo carmine disodium salt. For the sensing elements Q and R, the absorption peak wavelength is about 610 nm because the carrier of the sensing agent is paper and the color change is measured by reflection. Referring to Fig. 19, solid squares indicate the results of the sensing element Q, and solid circles indicate the results of the sensing element R having no gas selective permeable film.

The reflection absorbances of both the sensing elements Q and R decrease by 0.022 at an ozone integration value of 500 ppb × hour when they are exposed to ozone. That is, similar to the uncoated sensing element R, the sensing element Q covered with the gas selective permeable film reduces its absorbance by reacting with ozone, and can detect atmospheric-level ozone (about 10 to 120 ppb). Also, the reflection absorbance measured for the third time is smaller than that measured for the second time, indicating that a cumulative use (measurement) is possible.

Then, new sensing elements Q and R are prepared, and the reflection absorbances of the sensing elements Q and R are measured before they are exposed to detection target air. Subsequently, the sensing elements Q and R are exposed to detection target air in which ozone exists at 50 ppb and nitrogen dioxide exists at 100 ppb for 10 hrs. After the sensing elements Q and R have been exposed to the detection target air for 10 hrs, the reflection absorbances of the sensing elements Q and R are measured again.

Then, the sensing elements Q and R exposed for 10 hrs are exposed to the detection target air for another 10 hrs. After the sensing elements Q and R have thus been exposed to the detection target air for another 10 hrs, the reflection absorbances of the sensing elements Q and R are measured again. Fig. 20 shows the results of the three-time reflection absorbance measurement (absorbance analysis) described above. Fig. 20 shows changes in absorbance at 610 nm as the wavelength of an absorption peak in the visible region of indigo carmine disodium salt. Solid squares indicate the results of the sensing element Q, and solid circles indicate the results of the sensing element R having no gas selective permeable film.

The absorbances of both the sensing elements Q and R decrease when they are exposed to ozone, but the reduction amounts of the sensing elements Q and R are 0.022 and 0.026, respectively, at an ozone integration value of 500 ppb × hour. That is, the reduction amount of the absorbance of the sensing element R is larger than that shown in Fig. 19. This is the influence of nitrogen dioxide gas which coexists in the detection target. In this case, the relative sensitivity of carbon dioxide to ozone is 0.1. By contrast, the sensing element Q has no difference from Fig. 19.

That is, the sensing element Q is hardly influenced by nitrogen dioxide gas. In the sensing element Q as described above, the gas selective permeable film covering the cellulose filter paper as a porous material nearly prevents the penetration of nitrogen dioxide existing in a measurement target ambient, so ozone can be detected at higher sensitivity while the disturbance by nitrogen dioxide is suppressed.

Although cellulose filter paper is taken as an example in the above explanation, the material is not limited to this material. For example, a sheet-like material (e.g., nonwoven fabric) made of other fibers such as nylon or polyester may also be used as a porous material. Also, a porous material as a carrier of a sensing agent is preferably white when the change in reflecting state is to be checked as described above, but the color is not limited to white. Another color state may also be used as long as the change in color of the state dyed by a dye having an indigo ring such as indigo carmine can be checked.

### [4]

As an ozone gas sensing element, an ozone sensing sheet which is a sheet-like porous material made of fibers such as cellulose will be described below.

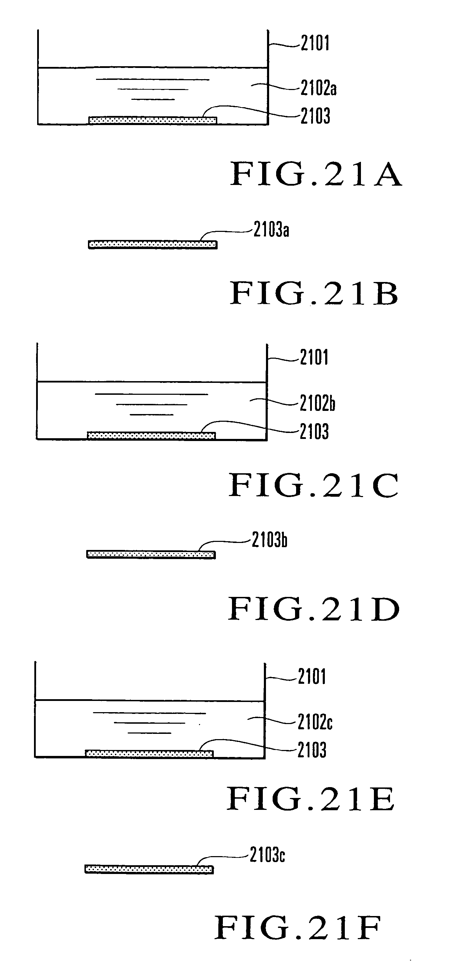

Figs. 21A to 21H are views for explaining the manufacture of an ozone sensing sheet according to an embodiment of the present invention. Referring to Figs. 21A to 21H, reference numeral 2101 denotes a vessel, and sensing solutions (sensing agent solutions) 2102a, 2102b, 2102c, and 2102d (to be described later) for sensing ozone are prepared in the vessel 2101. By dipping cellulose filter paper 2103 (to be described later) in each of the sensing solutions 2102a, 2102b, 2102c, and 2102d in the vessel 2101 for a predetermined time, the cellulose filter paper 2103 is formed into each of sheet-like ozone sensing sheets 2103a, 2103b, 2103c, and 2103d containing the sensing solutions 2102a, 2102b, 2102c, and 2102d, respectively.

First, as shown in Fig. 21A, 0.1 g of indigo carmine, 3.0 g of acetic acid as an acid, and 15 g of glycerin as a humectant are placed in the vessel 2101, and water is added to these materials to make 50 ml, thereby dissolving and adjusting indigo carmine to form the sensing solution 2102a.

The cellulose filter paper (No. 2) 2103 made of ADVANTEC is dipped into the sensing solution 2102a for 1 sec, removed from it, and dried with air to evaporate water contained in the cellulose filter paper 2103. In this manner, the indigo-blue ozone sensing sheet 2103a shown in Fig. 21B is formed. The cellulose filter paper is a porous material having a plurality of fine pores having an average pore size of about 0.1 to 1 µm.

Also, as shown in Fig. 21C, 0.1 g of indigo carmine, 7.5 g of tartaric acid as an acid, and 15 g of glycerin as a humectant are placed in the vessel 2101, and water is added to these materials to make 50 ml, thereby dissolving and adjusting indigo carmine to form the sensing solution 2102b.

The cellulose filter paper 2103 made of ADVANTEC is dipped into the sensing solution 2102b for 1 sec, removed from it, and dried with air to evaporate water contained in the cellulose filter paper 2103. In this way, the indigo-blue ozone sensing sheet 2103b shown in Fig. 21D is formed.

As shown in Fig. 21E, 0.1 g of indigo carmine, 0.556 g of acetic acid and 0.1 g of sodium acetate trihydrate as a buffer solution, and 15 g of glycerin as a humectant are placed in the vessel 2101, and water is added to these materials to make 50 ml, thereby dissolving and adjusting indigo carmine to form the sensing solution 2102c.

In the ozone sensing sheet according to this embodiment, a buffer solution having a buffer action which is a function of holding the pH value constant within the range of 1 to 4, preferably, 2 to 4, and more preferably, 3 to 4, is desirably used as the buffer solution. The buffer solution contained in the sensing solution 2102c described above, i.e., "0.556 g of acetic acid and 0. 1 g of sodium acetate trihydrate" acts as a buffer holding the pH value at 3.6, and a buffer solution contained in the sensing solution 2102d to be described later acts as a buffer holding the pH value at 2.1. Furthermore, when 0.492 g of acetic acid and 0.24 g of sodium acetate trihydrate are used as a buffer solution, this buffer solution acts as a buffer
holding the pH value at 4, and, when 12.5 ml of 0.2-mol/l potassium chloride and 33.5 ml of 0.2-mol/l hydrochloric acid are used as a buffer solution, this buffer solution acts as a buffer holding the pH value at 1. Note that tartaric acid and sodium tartrate may also be used as a buffer solution acting as a buffer
from pH 1 to pH 4.

The cellulose filter paper 2103 made of ADVANTEC is dipped into the sensing solution 2102c containing the buffer solution acting as the buffer
holding the pH value at a constant value of 3.6 for 1 sec, removed from the sensing solution 2102c, and dried with air to evaporate water contained in the cellulose filter paper 2103. In this manner, the indigo-blue ozone sensing sheet 2103c shown in Figs. 21F is formed.

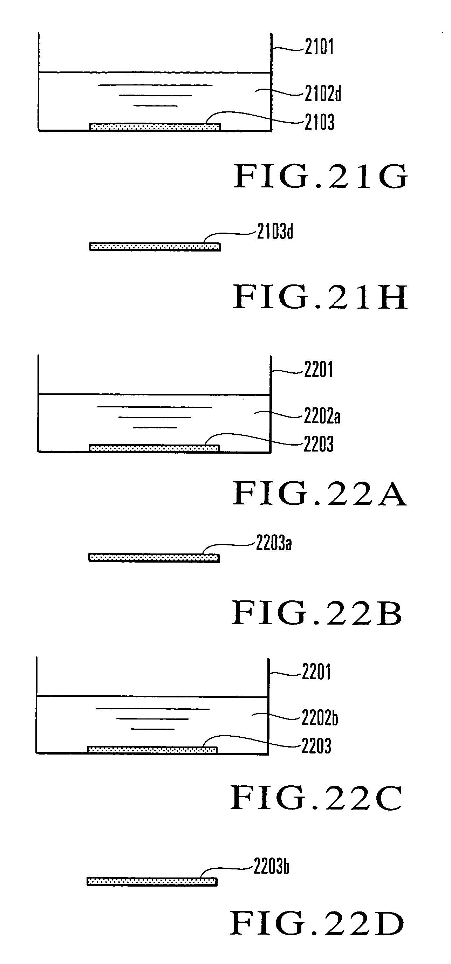

As shown in Fig. 21G, 0.1 g of indigo carmine, 0.119 ml of phosphoric acid and 0.27 g of sodium dihydrogenphosphate as a buffer solution, and 10 g of glycerin as a humectant are placed in the vessel 2101, and water is added to these materials to make 50 ml, thereby dissolving and adjusting indigo carmine to form the sensing solution 2102d.

The cellulose filter paper 2103 made of ADVANTEC is dipped into the sensing solution 2102d containing the buffer solution acting as the buffer
holding the pH value at a constant value of 2.1 described above for 1 sec, removed from the sensing solution 2102d, and dried with air to evaporate water contained in the cellulose filter paper 2103. In this way, the indigo-blue ozone sensing sheet 2103d shown in Figs. 21H is formed.

As a comparative example, water is added to 0.1 g of indigo carmine to make 50 ml, thereby dissolving and adjusting indigo carmine to form comparative sensing solution No. 1.

The cellulose filter paper made of ADVANTEC is impregnated with formed comparative sensing solution No. 1 for 1 sec, removed from it, and dried with air to evaporate water contained in the cellulose filter paper. In this manner, indigo-blue comparative ozone sensing sheet No. 1 is formed.

The ozone sensing sheets 2103a to 2103d and comparative ozone sensing sheet No. 1 thus formed were exposed to ozone gas under conditions shown in Table 1 below, and the color change property was observed with naked eyes. In Table 1, "o" indicates a case in which a color change is readily observable, and "×" indicates a case in which a color change cannot be easily confirmed. [Table 1]

**Table 1**

| | Sensing Sheet 2103a | Sensing Sheet 2103b | Sensing Sheet 2103d | Sensing Sheet 2103d | Comparison |
|---|---|---|---|---|---|
| 0.1 ppm × 4 hrs color change property | o | o | o | o | × |
| 0.075 ppm × 24 hrs color change property | o | o | o | o | × |
| 0.075 ppm × 4 hrs color change property | o | o | o | o | × |
| 0.035 ppm × 24 hrs color change property | o | o | o | o | × |
| 0.035 ppm × 12 hrs color change property | o | o | o | o | × |
| 0.035 ppm × 6 hrs color change property | o | o | o | o | × |

The results in Table 1 reveal that the ozone sensing sheets 2103a to 2103d can reliably sense ozone even when the ozone concentration is as low as 0.035 ppm. In addition, when the ozone sensing sheets 2103a to 2103d are exposed to ozone at a low concentration of 0.035 ppm for 12 hrs and for 24 hrs, the color differences can be clearly observed. Therefore, when an individual carries the ozone sensing sheets 2103a to 2103d for one day, he or she can estimate a rough ozone exposure amount from their colors.

Ozone in a gas to be sensed is entrapped into glycerin (humectant) held by glycerin or into water held by glycerin of the ozone sensing sheets 2103a to 2103d, and later causes a reaction which decomposes a C=C double bond of the dye having an indigo ring. The structure and electron state of the dye molecule change to change absorption near 600 nm in the visible region, so indigo blue of the ozone sensing sheets 2103a to 2103d lightens (discoloration).

On the other hand, the decomposed product formed by the decomposition of the indigo dye has absorption near 400 nm in the visible region, so the ozone sensing sheets 2103a to 2103d start changing the color to yellow (color generation).

As described above, the ozone sensing sheets explained with reference to Figs. 21A to 21H simultaneously cause the discoloration and color generation, and this makes the visual color change clearer.

If no glycerin is contained, the entrapment amount of ozone decreases extremely, and this makes visual color change observation impossible. In this case, however, discoloration can be measured by using a method such as a reflection absorbance method, so the sensing sheet is applicable to long-time detection of high-concentration (ppm-order) ozone gas.

Note that a gas to be sensed is not forcedly passed in the above description, but it is obviously also possible to measure the integration amount of ozone within a shorter time period by forcedly passing a gas to be sensed by using a pump or the like. In addition, the ozone sensing sheet may also be used as an ozone detection seal by coating the back side of the cellulose filter paper used with an adhesive. As described above, the ozone sensing sheets explained with reference to Figs. 21A to 21H can implement ozone gas detecting elements by using inexpensive cellulose filter paper. It is also possible to prevent the invasion of nitrogen dioxide by forming the above-mentioned selective permeable film on this ozone sensing sheet. The formation of the selective permeable film can prevent removal of the sensing agent from the ozone sensing sheet. For example, if the ozone sensing sheet is brought into contact with an aqueous solution, the sensing agent carried by the ozone sensing sheet elutes. When the selective permeable film is formed, however, it is possible to prevent the ozone sensing sheet from being brought into contact with a liquid such as an aqueous solution, thereby preventing elution of the sensing agent.

### [5]

Another ozone sensing sheet according to an embodiment of the present invention will be described below. Figs. 22A to 22D are views for explaining the manufacture of the ozone sensing sheet according to the embodiment of the present invention. Referring to Figs. 22, reference numeral 2201 denotes a vessel, and a sensing solution (sensing agent solution) 2202a (to be described later) for sensing ozone is prepared in the vessel 2201. By dipping cellulose filter paper 2203 (to be described later) in the sensing solution 2202a in the vessel 2201 for a predetermined time, the cellulose filter paper 2203 is formed into a sheet-like ozone sensing sheet 2203 containing the sensing solution 2202a.

First, as shown in Fig. 22A, 0.06 g of indigo carmine and 10 g of glycerin as a humectant are placed in the vessel 2201, and water is added to these materials to make 50 ml, thereby dissolving and adjusting indigo carmine to form the sensing solution 2202a.

The cellulose filter paper (No. 2) 2203 made of ADVANTEC is dipped into the formed sensing solution 2202a for 10 sec, removed from it, and dried with air to evaporate water contained in the cellulose filter paper 2203. In this manner, the indigo-blue ozone sensing sheet 2203a shown in Fig. 22B is formed. The cellulose filter paper is a porous material having a plurality of fine pores having an average pore size of about 0.1 to 1 µm.

As a comparative example, as shown in Fig. 22C, 0.06 g of indigo carmine are placed in the vessel 2201, and water is added to this indigo carmine to make 50 ml, thereby dissolving and adjusting indigo carmine to form a sensing solution 2202b.

The cellulose filter paper 2203 made of ADVANTEC is dipped into the formed sensing solution 2202b for 10 sec, removed from it, and dried with air to evaporate water contained in the cellulose filter paper 2203. In this way, an indigo-blue ozone sensing sheet 2203b shown in Fig. 22D is formed.

The ozone sensing sheets 2203a and 2203b thus formed were exposed to ozone gas under conditions shown in Table 2 below, and the color change property was observed with naked eyes. In Table 2, "o" indicates a case in which a color change is readily observable, and "×" indicates a case in which a color change cannot be easily confirmed.
[Table 2]

**Table 2**

| | Sensing sheet 2203a | Sensing sheet 2203b |
|---|---|---|
| 0.2 ppm × 3.5 hrs color change property | o | × |
| 0.075 ppm × 24 hrs color change property | o | × |
| 0.075 ppm × 7 hrs color change property | o | × |
| 0.035 ppm × 24 hrs color change property | o | × |
| 0.035 ppm × 12 hrs color change property | o | × |

The results in Table 2 reveal that the ozone sensing sheet 2203a can reliably sense ozone even when the ozone concentration is as low as 0.035 ppm. In addition, when the ozone sensing sheet 2203a is exposed to ozone at a low concentration of 0.035 ppm for 12 hrs and for 24 hrs, the color difference can be observed clearly. Therefore, when an individual carries the ozone sensing sheet 2203a for one day, he or she can estimate a rough ozone exposure amount from its color.

Ozone in a gas to be sensed is entrapped into glycerin (humectant) or into water held by glycerin of the ozone sensing sheet 2203a, and later causes a reaction which decomposes a C=C double bond of the dye having an indigo ring. The structure and electron state of the dye molecule in the ozone sensing sheet 2203a change by this decomposition reaction, and the degree of light absorption in a region (indigo blue region) near a wavelength of 600 nm in the visible region decreases, so indigo blue of the ozone sensing sheet 2203a lightens (discoloration).

On the other hand, the decomposed product formed by the decomposition of the indigo dye has a light absorption region in a region (yellow region) near 400 nm in the visible region, so the ozone sensing sheet 2203a starts changing the color to yellow (color generation).

As described above, the aforementioned ozone sensing sheet simultaneously causes the discoloration and color generation, and this makes the visual color change clearer.

If no glycerin is contained, i.e., in the case of the ozone sensing sheet 2203b, the entrapment amount of ozone decreases extremely, and this makes visual color change observation impossible. In this case, however, discoloration can be measured by using a method such as a reflection absorbance method, so the sensing sheet is applicable to long-time detection of high-concentration (ppm-order) ozone gas.

Note that a gas to be sensed is not forcedly passed in this embodiment, but it is obviously also possible to measure the integration amount of ozone within a shorter time period by forcedly passing a gas to be sensed by using a pump or the like.

In addition, the ozone sensing sheet may also be used as an ozone detection seal by coating the back side of the cellulose filter paper 2203 used with an adhesive.

As described above, the ozone sensing sheet explained with reference to Figs. 22A to 22D can implement an ozone gas sensing element by using inexpensive cellulose filter paper.

### [6]

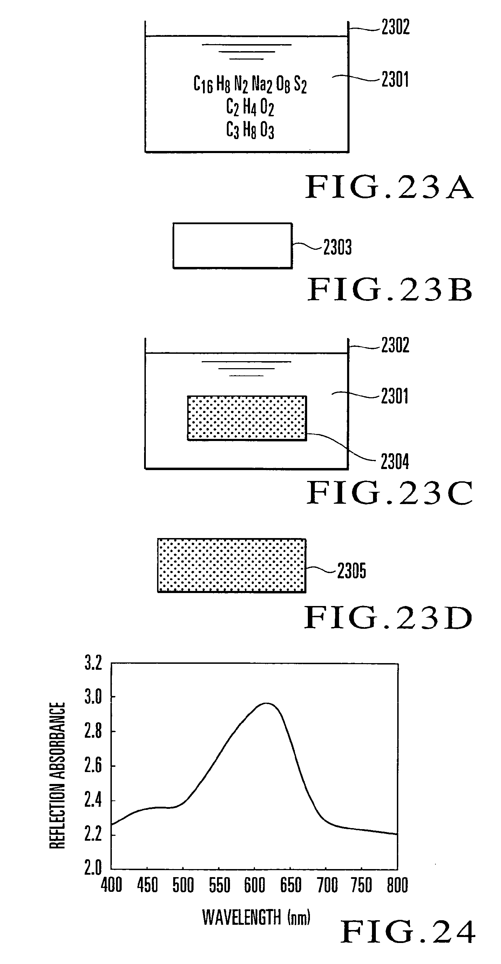

Another ozone sensing sheet according to an embodiment of the present invention will be described below. Figs. 23A to 23D are views for explaining an example of a method of manufacturing an ozone sensing sheet as an ozone gas sensing element according to the embodiment of the present invention. First, as shown in Fig. 23A, a vessel 2302 containing a sensing solution (sensing agent solution) 2301 is prepared. The sensing solution 2301 is an aqueous solution in which a dye made of indigo carmine (C₁₆H₈N₂Na₂O₈S₂), an acid made of acetic acid (C₂H₄0₂), and a humectant made of glycerin (C₃H₈0₃) are dissolved, and the wt% of the humectant is 10% to 50%. The sensing solution 2301 is prepared by dissolving, e.g., 0.06 g of indigo carmine, 3.0 g of acetic acid, and 10 g of glycerin in water to make 50 ml as a total amount. Indigo carmine is an acidic dye called Blue No. 2, so the sensing solution 2301 is an aqueous solution which is blue to bluish purple. The color of the sensing solution 2301 can be checked visually, Also, the sensing solution 2301 is made acidic by the addition of an acid.

Then, as shown in Fig. 23B, a sheet-like carrier 2303 having predetermined dimensions is prepared. The sheet-like carrier 2303 is a sheet made of fibers such as cellulose, e.g., cellulose filter paper (No. 2) made of ADVANTEC (Toyo Roshi). Accordingly, the sheet-like carrier 2303 is a porous material having a plurality of fine pores having an average pore size of about 0.1 to 1 µm. The color of the sheet-like carrier 2303 can be, e.g., white. Subsequently, the prepared sheet-like carrier 2303 is dipped into the sensing solution 2301 for, e.g., 30 sec to impregnate the sheet-like carrier 2303 with the sensing solution, thereby forming an impregnated sheet 2304 which is impregnated with the sensing solution 2301 as shown in Fig. 23C. In this state, the impregnated sheet 2304 is dyed by indigo carmine as a dye. After that, the impregnated sheet 2304 is pulled up from the sensing solution 2301, and dried in dry nitrogen to evaporate water contained in the impregnated sheet 2304, thereby forming an ozone sensing sheet 2305 as shown in Fig. 23D. Therefore, the ozone sensing sheet 2305 has a structure in which the sensing agent containing indigo carmine as a dye which changes its absorption in the visible region by reacting with ozone is formed in the pores of the sheet-like carrier 2303 as a porous material. The obtained ozone sensing sheet 2305 assumes indigo blue (blue) (is dyed indigo blue), and this color can be checked visually.

When the ozone sensing sheet 2305 thus manufactured is exposed to an environment in which ozone exists, the concentration of indigo blue gradually decreases with the exposure time, and the color finally changes to light yellow. For example, when the ozone sensing sheet 2305 is exposed to an environment in which the ozone concentration is 0.035 ppm, the color changes to light yellow when 16 hrs have passed. That is, ozone can be sensed by the change in color of the ozone sensing sheet 2305, and cumulative detection is possible. This color change occurs due to discoloration corresponding to decomposition, by ozone, of indigo carmine as a dye having an indigo ring, and color generation (light yellow) by the decomposition product formed by the decomposition of indigo carmine.

The dye is not limited to indigo carmine, and it is also possible to use a dye (stain) having an indigo ring, such as indigo, indigo carmine disodium salt, indigo carmine tripotassium salt, or indigo red. When any of these stains is used, ozone can be sensed by the change in color from the color immediately after dyeing. Also, the acid used is not limited to acetic acid, and it is possible to apply phosphoric acid, citric acid, tartaric acid, or the like. This acid is used to hold the pH of the sensing solution within the range of 2 to 4, and a pH buffering agent containing an acid and its salt may also be used. For example, a pH buffering agent containing acetic acid and sodium acetate acid hydrate may also be used. Alternatively, a pH buffering agent containing phosphoric acid and sodium phosphate may also be used. A pH buffering agent containing citric acid and sodium citrate may also be used. Likewise, a pH buffer agent containing tartaric acid and sodium tartrate may also be used.

The humectant will be explained below. The humectant is not limited to glycerin described above, and it is also possible to use ethylene glycol, propylene glycol, trimethylene glycol, or the like. Another humectant in which the above-mentioned dye dissolves may also be used. The reaction between the dye and ozone in the ozone sensing sheet 2305 formed by the manufacturing method shown in Figs. 23A to 23D is presumably accelerated because the humectant is contained in the ozone sensing sheet 2305. Ozone contained in air to which the ozone sensing sheet 2305 is exposed is entrapped in glycerin carried by the ozone sensing sheet 2305. In other words, ozone contained in air dissolves in glycerin carried by the ozone sensing sheet 2305. Note that ozone is entrapped in water held by glycerin as well.

Ozone thus entrapped causes a reaction which decomposes a C=C double bond of indigo carmine (a dye having an indigo ring) dissolved in this glycerin. Consequently, the structure and electron state of the dye molecule change, and this changes absorption near a wavelength of 600 nm and lightens the color (indigo blue) of indigo carmine. Also, since the decomposition product formed by the decomposition by ozone has absorption near a wavelength of 400 nm, the ozone sensing sheet 2305 containing the decomposed dye extinguishes indigo blue and assumes light yellow. In the ozone sensing sheet 2305 as described above, the dye is discolored by ozone, and a new color is generated by the decomposition of the dye, so the color change can readily be checked visually. Note that indigo carmine (dye) is also dissolved in water held by glycerin, ozone dissolved in water held by glycerin causes the above reaction with this dye as well.

In addition, since the ozone sensing sheet 2305 obtained by the manufacturing method shown in Figs. 23A to 23D is formed as it is impregnated with the sensing solution 2301 containing the humectant whose wt% is 10% to 50%, the color change (ozone sensing ability) caused by the existence of ozone is achieved more effectively. The relationship between the humectant amount and the color change of the ozone sensing sheet caused by the existence of ozone will be explained below. In the following description, the comparison between a plurality of samples (ozone sensing sheets) formed by changing the amount (content) of humectant in the sensing solution 2301 will be explained.

First, a sensing solution A is prepared by dissolving 0.06 g of indigo carmine, 3.0 g of acetic acid, and 10 g (20%) of glycerin in water to make 50 g as a total amount, and an ozone sensing sheet A is formed by using the sensing solution A in the same manner as above. The color of the formed ozone sensing sheet A is indigo blue.

Also, a sensing solution B is prepared by dissolving 0.06 g of indigo carmine, 3.0 g of acetic acid, and 25 g (50%) of glycerin in water to make 50 g as a total amount, and an ozone sensing sheet B is formed by using the sensing solution B in the same manner as above. The color of the formed ozone sensing sheet B is indigo blue.

A sensing solution C is prepared by dissolving 0.06 g of indigo carmine, 3.0 g of acetic acid, and 15 g (30%) of glycerin in water to make 50 g as a total amount, and an ozone sensing sheet C is formed by using the sensing solution C in the same manner as above. The color of the formed ozone sensing sheet C is indigo blue.

A sensing solution D is prepared by dissolving 0.06 g of indigo carmine, 3.5 g of citric acid monohydrate, and 10 g (20%) of glycerin in water to make 50 g as a total amount, and an ozone sensing sheet D is formed by using the sensing solution D in the same manner as above. The color of the formed ozone sensing sheet D is indigo blue.

A sensing solution E is prepared by dissolving 0.06 g of indigo carmine, a pH buffering agent containing 0.556 g of acetic acid and 0.1 g of sodium acetate trihydrate, and 15 g (30%) of glycerin in water to make 50 g as a total amount, and an ozone sensing sheet E is formed by using the sensing solution E in the same manner as above. The color of the formed ozone sensing sheet E is indigo blue.

A sensing solution F is prepared by dissolving 0.06 g of indigo carmine in water to make 50 g as a total amount, and an ozone sensing sheet F is formed by using the sensing solution F in the same manner as above. This is a sample to which neither an acid nor a humectant is added. The color of the formed ozone sensing sheet F is indigo blue.

A sensing solution G is prepared by dissolving 0.06 g of indigo carmine and 3.0 g of acetic acid in water to make 50 g as a total amount, and an ozone sensing sheet G is formed by using the sensing solution G in the same manner as above. This is a sample to which no humectant is added. The color of the formed ozone sensing sheet G is indigo blue.

A sensing solution H is prepared by dissolving 0.06 g of indigo carmine, 3.0 g of acetic acid, and 5 g (10%) of glycerin in water to make 50 g as a total amount, and an ozone sensing sheet H is formed by using the sensing solution H in the same manner as above. This is a sample in which the wt% (10%) of the humectant in the sensing solution is smaller than 20%. The color of the formed ozone sensing sheet H is indigo blue.

Each of the above samples (ozone sensing sheets A, B, C, D, E, F, G, and H) is exposed to detection target air under conditions shown in Table 3 below, and the change in color of each ozone sensing sheet is visually observed. In this color change observation, a color chart in which the light absorption intensity near a wavelength of 610 nm at which indigo carmine absorbs light changes in five steps is prepared, and the color change of each ozone sensing sheet is evaluated in five steps by comparing it with this color chart. In this evaluation, evaluation result "1" indicates a case in which no color change is observed. Evaluation results "2", "3", and "4" indicate cases in which the concentration of indigo blue decreases in the order named. Evaluation result "5" indicates a case in which the changed color of the ozone sensing sheet does not match any color of the color chart and is light yellow. Also, if the observed color is intermediate between the steps of the four-step color chart when compared with the color chart, e.g., if the observed color is intermediate between "2" and "3", the evaluation result is "2.5".
[Table 3]

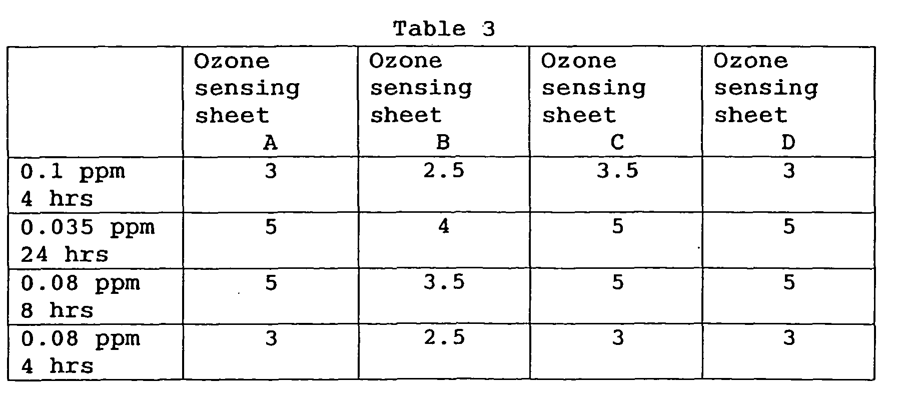

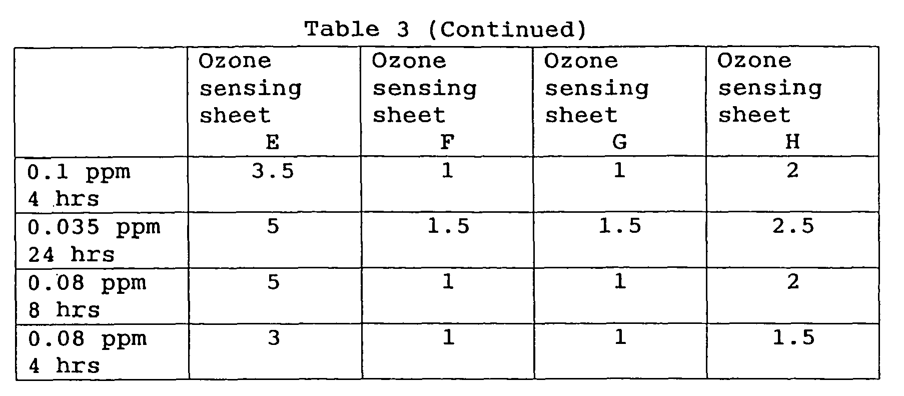

The results shown in Table 3 reveal that when each of the ozone sensing sheets A, B, C, D, and E is exposed to ozone for 24 hrs even if the ozone concentration is as low as 0.03 pm, the evaluation result ranges from "4" to "5", i.e., the concentration of indigo blue of the ozone sensing sheet almost disappears, and the color changes to light yellow. Also, when each of the ozone sensing sheets A, B, C, D, and E is exposed for 4 hrs to an ozone concentration of 0.08 ppm which is equivalent to 80% of the labor health allowable concentration, the evaluation result ranges from "2.5" to "3". Accordingly, the change in color of the ozone sensing sheet having sensed the state of an ozone concentration of 0.08 ppm can be identified visually. Furthermore, the evaluation result when the ozone sensing sheet is exposed for 8 hrs differs from that when it is exposed for 4 hrs, so it is possible to visually identify the difference between the color when the ozone sensing sheet is exposed for 8 hrs and that when it is exposed for 4 hrs. Therefore, when a person carries the ozone sensing sheet for 8 hrs as working hours or for one day, he or she can estimate a rough ozone exposure amount from the change in color of the ozone sensing sheet.

In contrast to the results of the ozone sensing sheets A, B, C, D, and E, as is apparent from the results shown in Table 3, even when the ozone sensing sheets F and G using no glycerin (humectant) are exposed to air containing ozone, no color change of the ozone sensing sheets is observed within a visually checkable range. As is evident from this result, ozone cannot be sensed very well when no humectant is used. In particular, ozone cannot be visually detected by the ozone sensing sheet using no humectant. This is probably because the reaction between the dye dissolved in the humectant and ozone is larger than that between the dye dissolved in held water (moisture) and ozone.

Also, for the ozone sensing sheet H in which the glycerin concentration in the sensing solution is as low as 10%, no large color change is observed within the range shown in Table 3. This is presumably because when the amount of humectant is small, the amount of held water is small, and the adsorption of ozone also decreases. In this state, a visual check of the change is not easy. However, a color change can easily be detected even with the ozone sensing sheet H if a method such as measurement by a reflection absorbance photometer (spectrophotometer) is used, and the sheet is applicable to long-time detection of high-concentration (ppm-order) ozone gas.

By contrast, the results shown in Table 3 indicate that the color changes are observed most notably in the ozone sensing sheets C and E, so the optimum amount of glycerin is presumably 30% when glycerin is used as a humectant. If the concentration of humectant in the sensing solution exceeds 50%, it becomes difficult to evenly impregnate the sheet-like carrier with the sensing solution, i.e., evenly perform dyeing by the dye. An ozone sensing sheet not evenly impregnated with the sensing solution causes a spotted color change by a reaction with ozone, and this makes accurate visual recognition difficult. If the concentration of humectant is too high, the dye existence ratio relatively lowers, and this decreases the ozone detection sensitivity.

Collectively, when the ozone sensing sheet 2305 is to be used in visually checkable ozone sensing, the ratio of the humectant in the sensing solution need only be 20% to 50%. Note that this is when acidity is imparted by acetic acid, and the ratio of the humectant need only be 10% to 50% if acidity is imparted by citric acid as will be explained later. Also, when glycerin is used as a humectant, the ratio of the humectant in the sensing solution is most preferably about 30%.

When the porous glass proposed in reference 4 is used as a carrier (porous material) instead of the sheet-like carrier, no twofold reaction amount difference or more is observed even when glycerin is used. This is probably because when the porous glass is used, water exists on the glass surface in a pore, and a reaction occurring between the dye and ozone by using this water as a medium becomes dominant, so no large effect by the use of the above-mentioned humectant such as glycerin can be obtained.

Note that a gas to be sensed is not forcedly passed through the ozone sensing sheet in the above description, but a gas to be sensed may also be forcedly passed by using a pump or the like. In this way, the integration amount of ozone can be measured within a shorter time period. In addition, the ozone sensing sheet may also be used as an ozone sensing seal by coating one surface of the sheet with an adhesive.

Note also that filter paper is used as the sheet-like carrier made of a porous material in the above explanation, but the material is not limited to filter paper. Any sheet-like material made of cellulose fibers such as plain paper can be used as the sheet-like carrier. Furthermore, a sheet-like material (e.g., nonwoven fabric) made of fibers, such as nylon or polyester, other than cellulose may also be used as the sheet-like carrier. Additionally, the sheet-like carrier is preferably white, but the color is not limited to white. Another color state may also be used as long as the change in color of the state dyed by a dye having an indigo ring such as indigo carmine can be checked.

### [7]

Other ozone sensing sheets according to an embodiment of the present invention will be described below. In the following description, a method of adjusting the sensitivity of an ozone sensing sheet by the amount of humectant will be explained. Note that in the following description, ozone sensing sheets are formed by the manufacturing method explained with reference to Figs. 23A to 23D, and the results of investigation of the relationship between the amount (content) of humectant in a sensing solution and the sensed state of ozone, the relationship between an acid used in the sensing solution and the sensed state of ozone, and the relationship between the humectant used and the sensed state of ozone will be explained.

Humectants used as investigation targets are glycerin, ethylene glycol, and propylene glycol. Also, acids used are acetic acid, citric acid, and tartaric acid. Indigo carmine is used as a dye in each case. The color of formed ozone sensing sheets is light blue. Note that the color of an ozone sensing sheet immediately after the formation has a characteristic as shown in Fig. 24 when the spectral reflectance is measured by a spectrophotometer (HITACHI U-4100 spectrophotometer). Note also that a sensing target is air in which ozone gas exists at 80 ppb, and a formed ozone sensing sheet is exposed to this sensing target air for 4 hrs.

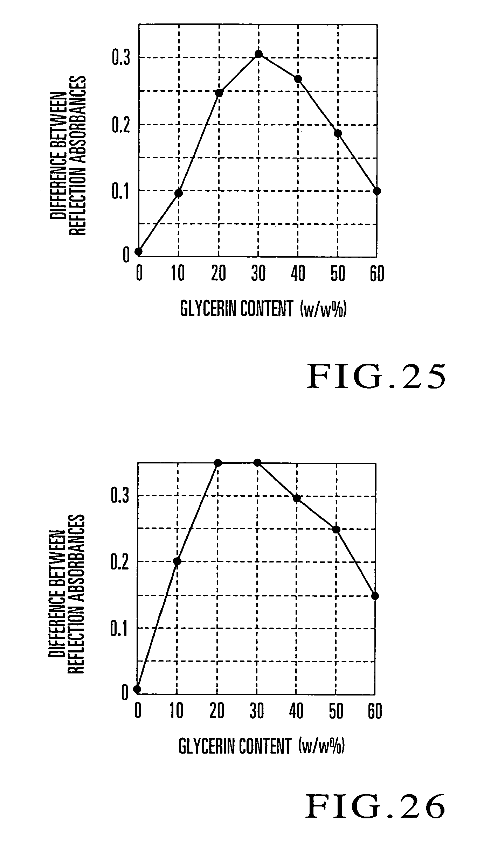

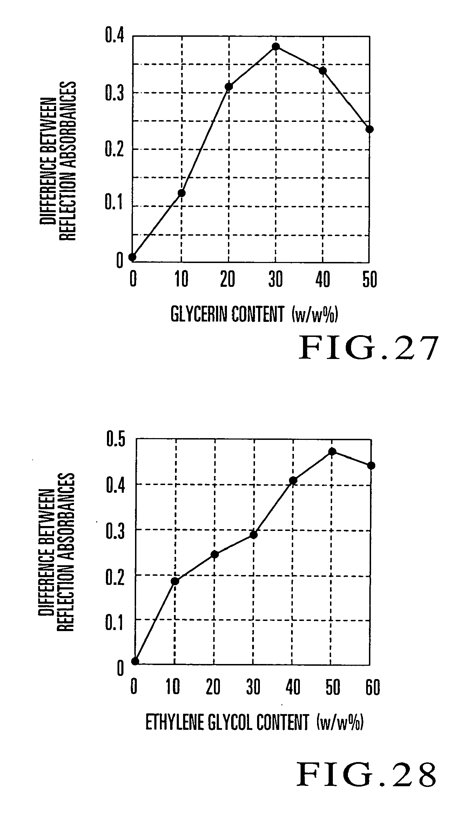

Fig. 25 shows the results of six ozone sensing sheets formed by using acetic acid as an acid and sensing solutions obtained by changing the content of glycerin as a humectant, and the result of an ozone sensing sheet formed by using no glycerin. Fig. 26 shows the results of six ozone sensing sheets formed by using citric acid as an acid and sensing solutions obtained by changing the content of glycerin, and the result of an ozone sensing sheet formed by using no glycerin. Fig. 27 shows the results of five ozone sensing sheets formed by using tartaric acid as an acid and sensing solutions obtained by changing the content of glycerin, and the result of an ozone sensing sheet formed by using no glycerin.

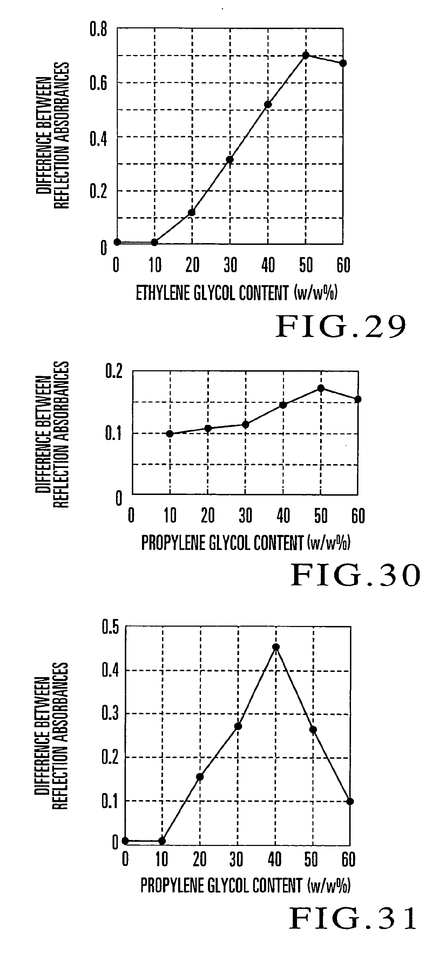

Fig. 28 shows the results of six ozone sensing sheets formed by using acetic acid as an acid and sensing solutions obtained by changing the content of ethylene glycol as a humectant, and the result of an ozone sensing sheet formed by using no ethylene glycol. Fig. 29 shows the results of six ozone sensing sheets formed by using citric acid as an acid and sensing solutions obtained by changing the content of ethylene glycol as a humectant, and the result of an ozone sensing sheet formed by using no ethylene glycol.

Fig. 30 shows the results of six ozone sensing sheets formed by using acetic acid as an acid and sensing solutions obtained by changing the content of propylene glycol as a humectant. Fig. 31 shows the results of six ozone sensing sheets formed by using citric acid as an acid and sensing solutions obtained by changing the content of propylene glycol as a humectant, and the result of an ozone sensing sheet formed by using no propylene glycol. Note that each of Figs. 25 to 31 shows the results of measurement of the spectral reflectance performed by the spectrophotometer (HITACHI U-4100 spectrophotometer), and indicates the difference between the absorbances before and after the ozone sensing sheet is exposed to sensing target air at a wavelength of 610 nm.

First, the results shown in Figs. 25 to 31 demonstrate that the amount of humectant in the sensing solution used to manufacture the ozone sensing sheet increases the change per unit time of the manufactured ozone sensing sheet. When glycerin is used as the humectant, the change per unit time increases as the content of glycerin increases while the glycerin content is 30% or less. When ethylene glycol is used as the humectant, the change per unit time increases as the content of ethylene glycol increases while the ethylene glycol content is 50% or less.

When propylene glycol is used as the humectant, the change when acetic acid is used differs from that when citric acid is used. When propylene glycol is used as humectant and acidity is imparted by acetic acid, the change per unit time increases as the content of propylene glycol increases while the propylene glycol content is 50% or less. On the other hand, when propylene glycol is used as humectant and acidity is imparted by citric acid, the change per unit time increases as the content of propylene glycol increases while the propylene glycol content is 40% or less. However, the change is larger when citric acid is used.

As is apparent from the foregoing, the color change amount per unit time during which the ozone sensing sheet is exposed to air containing the same amount of ozone can be changed by changing the content of humectant. The larger the color change per unit time, the higher the sensitivity; the smaller the color change per unit time, the lower the sensitivity. Therefore, the sensitivity of the ozone sensing sheet can be adjusted by adjusting the content of humectant in accordance with an application. In addition, the results shown in Fig. 26 reveal that when acidity is imparted by using citric acid, a change which is visually well checkable is obtained even if the content (wt%) of glycerin is 10%. Accordingly, when citric acid is used, the ozone sensing sheet can be used to sense visually checkable ozone as long as the ratio of the humectant in the sensing solution is 10% to 50%.

### [8]

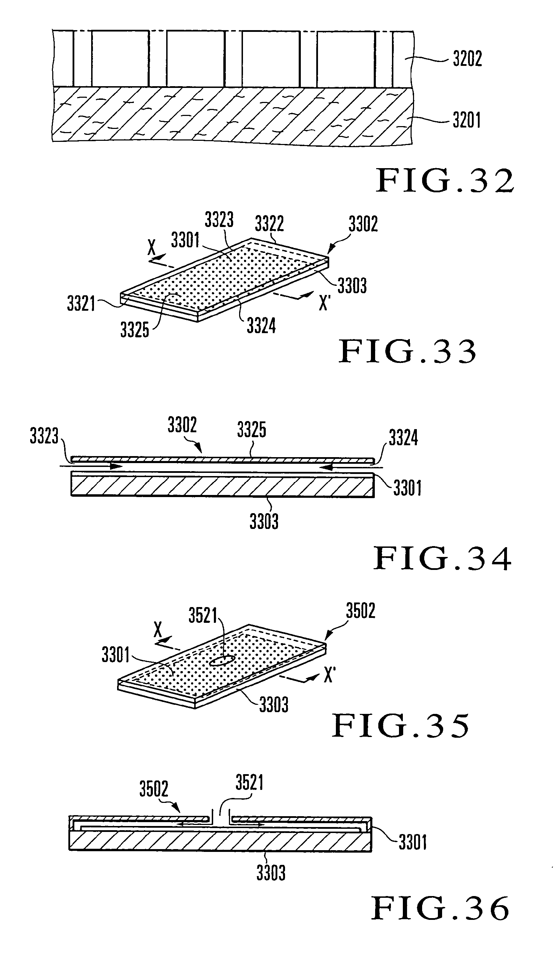

Another ozone gas sensing element according to an embodiment of the present invention will be described below. Fig. 32 is a view showing an example of the arrangement of the other ozone gas sensing element according to the embodiment of the present invention. Fig. 32 schematically shows the section. The ozone gas sensing element shown in Fig. 32 comprises an ozone sensing sheet 3201 similar to the ozone sensing sheet 2305 explained with reference to Figs. 23A to 23D, and a gas amount limiting layer 3202 formed on the surface of the ozone sensing sheet 3201.

The gas amount limiting layer 3202 is a light-transmitting porous material film having a plurality of through holes, such as a PTFE membrane filter made of ADVANTEC (Toyo Roshi). Since the gas amount limiting layer 3202 is formed in the ozone gas sensing element shown in Fig. 32, the amount of detection target air which reaches the ozone sensing sheet 3201 is limited. As a consequence, this ozone gas sensing element is not easily influenced by a wind blowing in a measurement environment.

For example, the results of detection obtained by a single ozone sensing sheet 3201 in a measurement environment in which a wind having a high wind velocity is blowing are different from those obtained in a measurement environment in which no such wind is blowing, even for the same ozone existing amount. In a measurement environment (in which ozone exists) in which a wind having a high wind velocity is blowing, the ozone sensing sheet 3201 changes its color within a shorter time period. By contrast, when the gas amount limiting layer 3202 is formed, the color change of the ozone sensing sheet 3201 remains the same regardless of the velocity of the wind, provided that the amount of existing ozone is constant.

The results of comparison of the presence/absence of the gas amount limiting layer 3202 will be explained below.

First, the manufacture of the ozone sensing sheet will be explained. First, a sensing solution is prepared by dissolving 0.06 g of indigo carmine, 3.0 g of acetic acid, and 15 g of glycerin (humectant) in water to make 50 ml as a total amount. Then, a sheet-like carrier (cellulose filter paper) having predetermined dimensions is prepared and dipped in the sensing solution for, e.g., 30 sec, thereby impregnating the sheet-like carrier with the sensing solution. After that, the sheet-like carrier is pulled up from the sensing solution, and dried in dry nitrogen to evaporate the contained water, thereby forming an ozone sensing sheet 3201.

A gas amount limiting layer 3202 which is a PTFE membrane filter (average pore size = 0.2 µm, thickness = 50 µm) made of ADVANTEC (Toyo Roshi) is formed on the surface of the ozone sensing sheet 3201 thus formed, thereby obtaining sample A.

Also, a gas amount limiting layer 3202 which is a PTFE membrane filter (average pore size = 0.8 µm, thickness = 75 µm) made of ADVANTEC (Toyo Roshi) is formed on the surface of the ozone sensing sheet 3201, thereby obtaining sample B.

A gas amount limiting layer 3202 which is a PTFE membrane filter (average pore size = 3.0 µm, thickness = 75 µm) made of ADVANTEC (Toyo Roshi) is formed on the surface of the ozone sensing sheet 3201, thereby obtaining sample C.

In addition, sample D is obtained by using the ozone sensing sheet 3201 alone.

Each of samples A to D described above is exposed to detection target air under conditions shown in Table 4, and the color change of each sample is visually observed. Note that in Table 4, "o" indicates a case in which the degrees of the observed color changes are equal, and "×" indicates a case in which the degrees of the observed color changes are not equal.
[Table 4]

**Table 4**

| | Sample A | Sample B | Sample C | Sample D |
|---|---|---|---|---|
| 0.1 ppm × 4 hrs 2 m/sec | Discolored | Discolored | Discolored | Discolored |
| 0.1 ppm × 4 hrs 7 m/sec | Discolored | Discolored | Discolored | Discolored |
| 0.1 ppm × 4 hrs color difference between 2 m/sec and 7 m/sec | o | o | o | × |
| 0.08 ppm × 8 hrs 2 m/sec | Discolored | Discolored | Discolored | Discolored |
| 0.08 ppm × 8 hrs 7 m/sec | Discolored | Discolored | Discolored | Discolored |
| 0.08 ppm × 8 hrs color difference between 2 m/sec and 7 m/sec | o | o | o | × |

The results shown in Table 4 indicate that in samples A, B, and C, the observed color changes were equal when the wind velocities were 2 m/sec and 7 m/sec in the measurement environment. By contrast, the degree of color change of sample D was obviously large when the wind velocity was 7 m/sec in the measurement environment, indicating the observed state in which a larger amount of ozone was detected. These results show that the influence of the wind velocity in the measurement environment can be suppressed by the gas amount limiting layer 3202. Note that the gas amount limiting layer 3202 is made of a porous film having no transparency and the color is checked from the back side by using transparent plastic on the back side in the above description, but the present invention is not limited to this structure. For example, the gas amount limiting layer 3202 need only be readily removable from the ozone sensing sheet 3201. When the gas amount limiting layer 3202 is removable, the color change of the ozone sensing sheet 3201 can be observed by removing the gas amount limiting layer 3202.

### [9]

Another ozone gas sensing element according to an embodiment of the present invention will be described below. Fig. 33 is a perspective view showing an example of the arrangement of the other ozone gas sensing element according to the embodiment of the present invention. Fig. 34 is a sectional view showing a section taken along a line X - X' in Fig. 33. The ozone gas sensing element shown in Figs. 33 and 34 comprises an ozone sensing sheet 3301 similar to the ozone sensing sheet 2305 explained with reference to Figs. 23A to 23D, and a gas amount limiting cover 3302 so formed as to cover the ozone sensing sheet 3301. The ozone sensing sheet 3301 is fixed on a substrate 3303, and the gas amount limiting cover 3302 is also fixed on the substrate 3303. The ozone sensing sheet 3301 is formed by dipping 2x2-cm cellulose filter paper into a sensing solution, which is prepared by dissolving 0.06 g of indigo carmine, 3.0 g of acetic acid, and 20 g of glycerin in water to make 50 ml as a total amount, thereby impregnating the cellulose filter paper with the sensing solution, and drying the cellulose filter paper.

The gas amount limiting cover 3302 is a substantially rectangular parallelepiped structure having side surfaces 3321 and 3322 facing each other, openings 3323 and 3324 formed in surfaces adjacent to the side surfaces 3321 and 3322, and an upper surface 3325 parallel to the plane of the substrate 3303. For example, the gas amount limiting cover 3302 is 2 cm in a lateral direction shown in Fig. 34 and 5 cm in a direction perpendicular to the lateral direction. In other words, the upper surface 3325 is a 2x5-cm rectangle. Also, the opening height of the openings 3323 and 3324 of the gas amount limiting cover 3302 is 1 mm. Accordingly, the spacing between the ozone sensing sheet 3301 and the upper surface 3325 is about 1 mm.

The gas amount limiting cover 3302 is made of a light-transmitting material such as glass or transparent plastic. Therefore, the ozone sensing sheet 3301 covered with the gas amount limiting cover 3302 can visually be checked from outside the upper surface 3325. Note that when the gas amount limiting cover 3302 and substrate 3303 are detachably attached, the gas amount limiting cover 3302 need not be transparent.

Since the ozone gas sensing element shown in Figs. 33 and 34 has the gas amount limiting cover 3302 having the above arrangement, sensing target air invades into the gas amount limiting cover 3302 from the openings 3323 and 3324, and comes in contact with the ozone sensing sheet 3301. Accordingly, the sensing target air comes in contact from the end portions of the ozone sensing sheet 3301 on the sides of the openings 3323 and 3324. If ozone is contained in the sensing target air, therefore, the ozone sensing sheet 3301 changes its color from the end portions at the openings 3323 and 3324.

For example, when the ozone gas sensing element shown in Figs. 33 and 34 is left to stand in atmosphere containing 5 ppm of ozone for 1 hr, the ozone sensing sheet 3301 changes its color (discolors) over the range of 2 mm from the end portions at the openings 3323 and 3324. Also, when the ozone gas sensing element shown in Figs. 33 and 34 is left to stand in atmosphere containing 10 ppb of ozone for 2,160 hrs, the ozone sensing sheet 3301 changes its color (discolors) over the range of 8 mm from the end portions at the openings 3323 and 3324. As described above, since the gas amount limiting cover 3302 is formed, the integration amount of ozone can be detected by the change of the discolored region of the ozone sensing sheet 3301.

The ozone gas sensing device shown in Figs. 33 and 34 may also be closed with a porous material film (gas permeable film) having a plurality of through holes, such as a PTFE membrane filter made of ADVANTEC (Toyo Roshi). For example, the membrane filter has an average pore size of 3.0 µm and a thickness of 75 µm. The influence of a wind in a sensing target ambient can be suppressed by thus covering the openings with the gas permeable film made of a porous material film.

For example, when the ozone gas sensing element shown in Figs. 33 and 34 having the gas permeable film at the openings is left to stand for 1 hr in atmosphere which contains 5 ppm of ozone and in which a wind having a wind velocity of 1.5 m/s is blowing, the ozone sensing sheet 3301 changes its color (discolors) over the range of 2 mm from the end portions at the openings 3323 and 3324. Also, when the ozone gas sensing element shown in Figs. 33 and 34 having the gas permeable film at the openings is left to stand for 2,160 hrs in atmosphere which contains 10 ppb of ozone and in which a wind having a wind velocity of 1.5 m/s is blowing, the ozone sensing sheet 3301 changes its color (discolors) over the range of 8 mm from the end portions at the openings 3323 and 3324.

These results are the same as those described above, and indicate that the influence of the wind is suppressed by the gas permeable film. In addition, since the openings 3323 and 3324 are closed (covered) with the gas permeable film, the invasion of a solution (liquid) such as water to the gas amount limiting cover 3302 can be prevented, thereby preventing the contact of a liquid to the ozone sensing sheet 3301. Especially when the gas permeable film is made of a water-repellent fluorine resin such as ethylene tetrafluoride resin, the invasion of a liquid such as water can be prevented more effectively. When the gas permeable film has an average pore size of 0.1 to 2 µm and a thickness of 35 to 200 µm, ozone can permeate, and the invasion of a liquid can be prevented.

Although the openings are formed in the side surfaces of the gas amount limiting cover in the above description, the present invention is not limited to this structure. For example, as shown in Figs. 35 and 36, it is also possible to use a gas amount limiting cover 3502 having an opening 3521 in the central portion of the upper surface. All the side surfaces of the gas amount limiting cover 3502 are closed. When the gas amount limiting cover 3502 having this arrangement is used, sensing target air invades into the gas amount limiting cover 3502 from the opening 3521, and comes in contact with the ozone sensing sheet 3301. Accordingly, the sensing target air comes in contact with the ozone sensing sheet 3301 from its central portion below the opening 3521. If ozone is contained in the sensing target air, therefore, the ozone sensing sheet 3301 changes its color from the central portion below the opening 3521 to the periphery. Note that the opening 3521 may also be closed with the above-mentioned gas permeable film in this example as well. Note also that the ozone sensing sheet is formed by impregnating it with the sensing solution in the above description, but the present invention is not limited to this method. For example, an ozone sensing sheet similar to that described above can easily be formed by a method such as spraying of the sensing solution, application of the ozone sensing solution by brush, or application of the ozone sensing solution by screen printing.

## Claims

1. An ozone gas sensing element **characterized by** comprising:
a porous material and a sensing agent formed in pores of said porous material; and
a light-transmitting gas selective permeable film which covers a surface of said porous material,
wherein said sensing agent contains a dye which changes absorption in a visible region by reacting with ozone, and
said gas selective permeable film comprises an organic polymer which uses, as a monomer, a compound made of a chainlike molecule containing a vinyl group.

2. An ozone gas sensing element according to claim 1, **characterized in that** said porous material is transparent.

3. An ozone gas sensing element according to claim 2, **characterized in that** said porous material is made of glass.

4. An ozone gas sensing element according to claim 3, **characterized in that** an average pore size of said porous material allows penetration of said sensing agent, and is less than 20 nm.

5. An ozone gas sensing element according to claim 1, **characterized in that** said porous material is a sheet-like material made of fibers.

6. An ozone gas sensing element according to claim 5, **characterized in that**
said ozone gas sensing element contains a humectant carried by said porous material, and
comprises an ozone sensing sheet formed by dipping said porous material into an aqueous solution in which said dye and said humectant are dissolved, thereby impregnating said porous material with said aqueous solution, and drying said porous material.

7. An ozone gas sensing element according to claim 6, **characterized in that** said ozone sensing sheet is formed by dipping said porous material into an aqueous solution in which said dye and said humectant whose wt% is 10% to 50% are dissolved, thereby impregnating said porous material with said aqueous solution, and drying said porous material.

8. An ozone gas sensing element according to claim 6, **characterized in that** said humectant comprises at least one of glycerin, ethylene glycol, propylene glycol, and trimethylene glycol.

9. An ozone gas sensing element according to claim 8, **characterized in that** said humectant comprises glycerin, and the wt% of said humectant is 30% in said aqueous solution.

10. An ozone gas sensing element according to claim 6, **characterized in that** said solution is made acidic.

11. An ozone gas sensing element according to claim 10, **characterized in that** said solution is made acidic by at least one acid selected from the group consisting of acetic acid, citric acid, and tartaric acid.

12. An ozone gas sensing element according to claim 10, **characterized in that** said solution is made acidic by a pH buffering agent made of an acid and a salt thereof.

13. An ozone gas sensing element according to claim 1, **characterized in that** said monomer comprises at least one of acrylic acid, acrylonitrile, methacrylic acid, methyl methacrylate, vinyl chloride, and vinylidene chloride.

14. An ozone gas sensing element according to claim 1, **characterized in that** said organic polymer comprises a copolymer.

15. An ozone gas sensing element according to claim 1, **characterized in that** said organic polymer comprises polymethylmethacrylate.

16. An ozone gas sensing element according to claim 15, **characterized in that** the molecular weight of said organic polymer is not less than 100,000.

17. An ozone gas sensing element according to claim 1, **characterized in that** said dye contains an indigo ring.

18. An ozone gas sensing element **characterized by** comprising an ozone sensing sheet formed by carrying a dye containing an indigo ring and a humectant by a sheet-like carrier made of fibers.

19. An ozone gas sensing element according to claim 18, **characterized in that** said carrier comprises a sheet-like carrier made of cellulose.

20. An ozone gas sensing element according to claim 18, **characterized in that** said ozone sensing sheet is formed by dipping said carrier into an aqueous solution in which said dye and said humectant are dissolved, thereby impregnating said carrier with said aqueous solution, and drying said carrier.

21. An ozone gas sensing element according to claim 20, **characterized in that** said ozone sensing sheet is formed by dipping said carrier into an aqueous solution in which said dye and said humectant whose wt% is 10% to 50% are dissolved, thereby impregnating said carrier with said aqueous solution, and drying said carrier.

22. An ozone gas sensing element according to claim 20, **characterized in that** said humectant comprises at least one of glycerin, ethylene glycol, propylene glycol, and trimethylene glycol.

23. An ozone gas sensing element according to claim 22, **characterized in that** said humectant comprises glycerin, and the wt% of said humectant in said aqueous solution is 30%.

24. An ozone gas sensing element according to claim 20, **characterized in that** said dye comprises indigo carmine.

25. An ozone gas sensing element according to claim 20, **characterized in that** said solution is made acidic.

26. An ozone gas sensing element according to claim 25, **characterized in that** said solution is made acidic by at least one acid selected from the group consisting of acetic acid, citric acid, and tartaric acid.

27. An ozone gas sensing element according to claim 25, **characterized in that** said solution is made acidic by a pH buffering agent made of an acid and a salt thereof.

28. An ozone gas sensing element according to claim 20, **characterized in that**
said ozone sensing sheet comprises a plurality of ozone sensing sheets, and
said ozone sensing sheets are formed by dipping said carriers into aqueous solutions in which said humectants different in wt% are dissolved, thereby impregnating said carriers with said aqueous solutions, and drying said carriers.

29. An ozone gas sensing element according to claim 20, **characterized by** further comprising a gas amount limiting layer formed on a surface of said ozone sensing sheet, and including a plurality of through holes.

30. An ozone gas sensing element according to claim 20, **characterized by** further comprising a gas amount limiting cover formed to cover said ozone sensing sheet, and including an opening in a portion thereof.

31. An ozone gas sensing element according to claim 30, **characterized by** further comprising a gas permeable film covering the opening.

32. An ozone gas sensing element according to claim 20, **characterized by** further comprising a light-transmitting gas selective permeable film which covers a surface of said ozone sensing sheet,
wherein said gas selective permeable film comprises an organic polymer which uses, as a monomer, a compound made of a chainlike molecule containing a vinyl group.

33. An ozone gas sensing element according to claim 32, **characterized in that** said monomer comprises at least one of acrylic acid, acrylonitrile, methacrylic acid, methyl methacrylate, vinyl chloride, and vinylidene chloride.

34. An ozone gas sensing element according to claim 32, **characterized in that** said organic polymer comprises a copolymer.

35. An ozone gas sensing element according to claim 32, **characterized in that** said organic polymer comprises polymethylmethacrylate.

36. An ozone gas sensing element according to claim 35, **characterized in that** a molecular weight of said organic polymer is not less than 100,000.
